# EUROPÄISCHE PATENTSCHRIFT

(11) **EP 3 402 687 B1**
(45) Veröffentlichungstag und Bekanntmachung des Hinweises auf die Patenterteilung: **12.05.2021**
(21) Anmeldenummer: 17700916.4
(22) Anmeldetag: 10.01.2017
(51) Int. Cl.: B60J 1/17, B60J 10/79, B60J 5/04

(54) **FAHRZEUGTÜRBAUGRUPPE MIT EINFÜHRBEREICHEN AN RAHMENSEITIGEN FÜHRUNGSELEMENTEN FÜR EIN FLÄCHENBÜNDIGES SCHEIBENKONZEPT UND MONTAGEVERFAHREN**
VEHICLE DOOR ASSEMBLY WITH MOUNTING AREAS ON THE FRAME SIDED GUIDE ELEMENTS FOR A FLUSH WINDOW CONCEPT AND ASSEMBLY PROCEDURE
ENSEMBLE DE PORT DE VÉHICULE AVEC DES PARTIES D'INSERTION DES ÉLÉMENTS DE GUIDAGE DU CÔTÉ DE L'ARMATURE POUR UN CONCEPT AU RAS DE LA FENÈTRE ET LES MÖTHODES D' ASSEMBLAGE

(30) Priorität: 15.01.2016 DE 102016200475
(43) Veröffentlichungstag der Anmeldung: 21.11.2018
(73) Patentinhaber: Brose Fahrzeugteile SE & Co. Kommanditgesellschaft, Bamberg, 96052 Bamberg (DE)
(72) Erfinder: HEPPNER, Matthias, 96224 Burgkunstadt (DE); FREYMUTH, Ian, 08810 Sant Pere de Ribes/Rocamar (ES)
(74) Vertreter: Maikowski & Ninnemann Patentanwälte Partnerschaft mbB
(86) Internationale Anmeldenummer: PCT/EP2017/050363
(87) Internationale Veröffentlichungsnummer: WO 2017/121705

(56) Entgegenhaltungen:
- DE-A1- 19 962 988
- DE-U1-202011 050 329
- JP-A- S61 169 317
- US-A- 4 567 691
- US-A1- 2007 261 313
- US-A1- 2013 061 526

## Beschreibung

Die Erfindung betrifft eine Fahrzeugtürbaugruppe nach dem Oberbegriff des Anspruchs 1 sowie ein Verfahren zur Montage einer Fahrzeugtürbaugruppe.

Fahrzeugtürbaugruppen mit einer entlang einer Verstellbahn verstellbaren und sich entlang einer (gegebenenfalls gekrümmten) Scheibenebene erstreckenden Fensterscheibe sind für Fahrzeugfensterheber weithin bekannt. Über die Fensterscheibe wird dabei in einem geschlossenen Zustand eine Fensteröffnung innerhalb einer Fahrzeugtür verschlossen. In den letzten Jahren erfreuen sich zumindest bei Oberklasse-Fahrzeugen sogenannte flächenbündige Scheibenkonzepte (englisch "flush glass" oder "flush glazing") größerer Beliebtheit. Hierbei liegt die Fensterscheibe in ihrer geschlossenen Position flächenbündig zu oberen und/oder seitlichen Karosserieteilen vor, die eine durch die Fensterscheibe zu schließende Fensteröffnung beranden. Die Fensterscheibe liegt somit mit Blick auf ihrer Außenseite nicht gegenüber den sie umgebenden Karosserieteilen zurückgesetzt vor, wenn sie vollständig geschlossen ist. Vielmehr wird der Eindruck einer durchgehend verlaufenden, ebenen Scheiben- und Karosseriefläche an der Fahrzeugseite erzeugt. Beispielsweise ist ein solches flächenbündiges Scheibenkonzept in der US 4 567 691, DE 35 00 791 A1, DE 10 2012 214 508 A1 oder der FR 2 604 660 A1 beschrieben. In neuerer Zeit erfolgte eine Umsetzung eines flächenbündigen Scheibenkonzepts beispielsweise im Porsche Panamera.

Zur Führung der Fensterscheibe wird bei derartigen Scheibenkonzepten an einem vorderen und hinteren seitlichen Rand der Fensterscheibe ein Führungselement fixiert. Ein solches Führungselement ist dann jeweils entlang der Verstellbahn an einem anderen, karosserieseitigen oder türseitigen Führungselement, das üblicherweise als Führungsprofil ausgebildet ist, verschieblich geführt. Die an der Fensterscheibe fixierten, scheibenseitigen Führungselemente werden dabei regelmäßig als "Pinguides" bezeichnet. Die Montage einer derartigen Fensterscheibe ist bisher jedoch vergleichsweise aufwendig. So muss die Scheibe regelmäßig von unten in einen Führungskanal eines karosserieseitigen oder türseitigen Führungselements in Form eines Führungsprofils eingeschoben werden, d.h., zum Beispiel von unterhalb einer Fensterbrüstung einer Fahrzeugtür. Eine solche Montage erfordert dann aber auch ein spezielles Türkonzept, bei dem entweder eine Türaußenhaut nachträglich an einen Türkasten montiert wird oder ein komplett montierbares Türrahmenmodul, bestehend aus Türträger, Fensterrahmen und hieran montierter Scheibe, bereitgestellt und nachträglich mit den restlichen Komponenten der Fahrzeugtür, insbesondere einer Türinnenhaut und einer Türaußenhaut verbunden wird.

Es ist daher Aufgabe der Erfindung, eine Fahrzeugtürbaugruppe bereitzustellen, die bei Fahrzeugfensterhebern für ein flächenbündiges Scheibenkonzept (sogenanntes "flush glass" oder "flush glazing" Konzept) eine vereinfachte Montage ermöglicht.

Diese Aufgabe wird sowohl mit einer Fahrzeugtürbaugruppe des Anspruchs 1 als auch mit einem Montageverfahren des Anspruchs 12 gelöst.

Erfindungsgemäß ist eine Fahrzeugtürbaugruppe vorgesehen, die wenigstens das Folgende umfasst:
- eine durch einen Fahrzeugfensterheber verstellbare Fensterscheibe, bei dem die Fensterscheibe in einem geschlossenen Zustand flächenbündig zu oberen und/oder seitlichen Karosserieteilen vorliegt, die eine durch die Fensterscheibe zu schließende Fensteröffnung einer Fahrzeugtür beranden,
- einen Türrahmenträger, der einen Türkasten unterhalb der Fensteröffnung definiert, in den hinein die Fensterscheibe zum Öffnen abgesenkt wird, und der wenigstens zwei seitliche Rahmenteile aufweist, die einander oberhalb des Türkastens an der Fensteröffnung gegenüberliegen,
- ein erstes rahmenseitiges Führungselement zur seitlichen Führung der Fensterscheibe an einem der seitlichen Rahmenteile und einem zweiten rahmenseitigen Führungselement zur seitlichen Führung der Fensterscheibe an dem anderen der seitlichen Rahmenteile, und
- und zwei scheibenseitige Führungselemente, über die die Fensterscheibe an den rahmenseitigen Führungselementen verschieblich gehalten ist.

Hierbei weisen die ersten und zweiten rahmenseitigen Führungselemente jeweils oberhalb des Türkastens einen Einführbereich auf, über den ein scheibenseitiges Führungselement von oben an das jeweilige zugeordnete erste oder zweite rahmenseitige Führungselement ansetzbar ist, um die Fensterscheibe an den Türrahmenträger zu montieren. Mit einem Ansetzen "von oben" ist hierbei gemeint, dass die ersten und zweiten scheibenseitigen Führungselemente, die vorzugsweise bereits an der zu montierenden Fensterscheibe fixiert sind, von oberhalb des Türkastens und im Wesentlichen entlang der späteren Verstellbahn der Fensterscheibe in Richtung des Türkastens angesetzt werden, sodass rahmen- und scheibenseitige Führungselemente aneinander gehalten sind und die scheibenseitigen Führungselemente an den rahmenseitigen Führungselementen (in Richtung des Türkastens) nach unten verschoben werden.

Des weiteren ist erfindungsgemäß wenigstens ein Verschlussteil vorgesehen, das anzubringen ist, um wenigstens einen der Einführbereiche der ersten und zweiten rahmenseitigen Führungselemente zu verschließen, nachdem die scheibenseitigen ersten und zweiten Führungselemente hieran angesetzt wurden. In einer Ausführungsvariante ist demgemäß vorgesehen, dass die Einführbereiche über ein einzelnes Verschlussteilen oder wenigstens zwei separate Verschlussteile - vorzugsweise ebenfalls durch Ansetzen des Verschlussteils oder der Verschlussteile von oben - verschlossen werden, nachdem scheibenseitige Führungselemente, die vorzugsweise an der Fensterscheibe bereits fixiert sind, von oben an die rahmenseitigen Führungselemente derart angesetzt wurden, dass die scheibenseitigen Führungselemente an den rahmenseitigen Führungselementen verschieblich gehalten sind, und nachdem die scheibenseitigen Führungselemente (und damit vorzugsweise die hiermit verbundene Fensterscheibe) an den rahmenseitigen Führungselementen entlang nach unten in eine teilweise oder vollständig geöffnete Stellung der Fensterscheibe verschoben wurden.

Grundsätzlich ist damit bei einer Verwendung einer erfindungsgemäß ausgestatteten Fahrzeugtürbaugruppe in einer Fahrzeugtür kein Türkonzept mehr notwendig, bei dem eine Türaußenhaut nachträglich, d.h., insbesondere nach dem Einsetzen der Fensterscheibe, montierbar ist. Die Türaußenhaut kann vielmehr zur Bildung eines Teils des Türkastens an dem Türrahmenträger bereits vorgesehen oder durch diesen Türrahmenträger ausgebildet sein, bevor die Fensterscheibe an den Türrahmenträger montiert wird. Türinnenhaut und Türaußenhaut definieren hierbei bereits den Hohlraum im Türkasten der Fahrzeugtür, in den die bestimmungsgemäß montierte Fensterscheibe zum Öffnen absenkbar ist.

Üblicherweise weist wenigstens ein rahmenseitiges Führungselement einen Führungskanal auf, in denen das zugeordnete scheibenseitige Führungselement eingeschoben wird. Selbstverständlich kann auch eine umgekehrte Lösung vorgesehen sein, zum Beispiel mit einer Rahmenseitig vorspringenden Leiste des rahmenseitigen Führungselements und einem im Querschnitt U-förmigen scheibenseitigen Führungselement, das das zugeordnete rahmenseitige Führungselement umgreift und hierüber verschieblich an diesem gehalten ist. Ein scheibenseitiges Führungselement ist bevorzugt in einem Bereich nahe einer seitlichen Scheibenkante der Fensterscheibe fixiert, beispielsweise mittels einer Verklebung. Sind die wenigstens zwei ersten und zweiten scheibenseitigen Führungselemente im Bereich der Scheibenkanten bereits fixiert, ist mit einer erfindungsgemäß ausgeschalteten Fahrzeugtürbaugruppe die Fensterscheibe problemlos von oben über die an den rahmenseitigen Führungselementen bereitgestellten Einführbereiche montierbar. Damit ist die Fensterscheibe bereits an dem Türrahmenträger verschieblich gehalten, bevor über das wenigstens eine Verschlussteil ein Einführbereich oder mehrere (mindestens zwei) Einführbereiche geschlossen werden.

Wenigstens ein rahmenseitiges Führungselement kann durch ein seitliches Rahmenteil selbst ausgebildet und beispielsweise hieran ausgeformt sein. Dies schließt insbesondere ein, dass an einem seitlichen Rahmenteil des Türrahmenträgers oberhalb des Türkastens ein Führungskanal ausgebildet ist.

Alternativ oder ergänzend kann wenigstens ein rahmenseitiges Führungselement durch ein separates Bauteil ausgebildet sein, das an einem seitlichen Rahmenteil fixiert ist. So kann beispielsweise eine separate Führungsschiene an einem seitlichen Rahmenteil des Türrahmenträgers fixiert sein, um eine seitliche Führung für die Fensterscheibe oberhalb des Türkastens bereitzustellen. Hierbei ist selbstverständlich nicht ausgeschlossen, dass sich ein seitliches Rahmenteile oder ein separat hieran angebrachtes Führungselement zur Führung der Fensterscheibe auch in den Türkasten hinein erstreckt.

In einer Ausführungsvariante ist über ein bestimmungsgemäß angebrachtes Verschlussteil sowohl ein Einführbereich des ersten rahmenseitigen Führungselements als auch ein Einführbereich des zweiten rahmenseitigen Führungselements verschlossen. Über die Anbringung eines einzelnen Verschlussteils können somit beide Einführbereiche bestimmungsgemäß geschlossen werden. Hierfür ist das Verschlussteil beispielsweise längserstreckt ausgebildet und überbrückt in einem bestimmungsgemäß angebrachten Zustand einen Abstand zwischen den beiden Einführbereichen, die an den sich gegenüberliegenden rahmenseitigen Führungselementen vorgesehen sind.

In einer Ausführungsvariante ist ein Einführbereich wenigstens eines rahmenseitigen Führungselements durch einen profilierten nach oben offenen Endbereich des rahmenseitigen Führungselements gebildet. Derart ist beispielsweise ein durch das Führungselement ausgebildeter Führungskanal für ein scheibenseitiges Führungselement von oben zugänglich, sodass, bei noch nicht angebrachtem Verschlussteil, das rahmenseitige Führungselement hieran eingeschoben werden kann. Mit dem wenigstens einen Verschlussteil wird dann dieser offene Endbereich verschlossen und/oder überdeckt, sodass ein scheibenseitiges Führungselement über den während des Zusammenbaus der Fahrzeugtürbaugruppe offenen Endbereich nach dem Zusammenbau der Fahrzeugtür nicht mehr hinausgeschoben und von dem zugehörigen rahmenseitigen Führungselement getrennt werden kann. Über das Verschlussteil ist somit die verschiebliche Lagerung wenigstens eines scheibenseitigen Führungselements an einem zugehörigen rahmenseitigen Führungselement gesichert, sodass ein scheibenseitiges Führungselement nach Anbringung des Verschlussteils nicht (mehr) nach oben ausgeschoben und von dem scheibenseitigen Führungselement getrennt werden kann.

Zur Ausbildung eines üblicherweise U-förmigen Fensterrahmens oberhalb des Türkastens und damit oberhalb einer Fensterbrüstung der Fahrzeugtür ist ein oberes Rahmenteil vorgesehen, dass die ersten und zweiten seitlichen Rahmenteile oberhalb des Türkastens miteinander verbindet. Ein solches oberes Rahmenteil liegt regelmäßig bei geschlossener Fahrzeugtür im Bereich eines Daches des Fahrzeugs vor.

In einer Variante ist das wenigstens eine Verschlussteil im Bereich des oberen Rahmenteils anzubringen, um den wenigstens einen Einführbereich eines rahmenseitigen Führungselements hierüber zu verschließen.

Insbesondere hierbei kann das obere Rahmenteil im Einführbereich wenigstens eines rahmenseitigen Führungselements einen Abschnitt ausbilden, der gegenüber einem angrenzenden Abschnitt des oberen Rahmenteils und/oder gegenüber einem angrenzenden Abschnitt eines zeitlichen Rahmenteils zurückgesetzt ist, und zwar im Wesentlichen senkrecht und/oder parallel zu einer Scheibenebene, entlang der sich die montierte Fensterscheibe im geschlossenen Zustand erstreckt. Bezogen auf einen geschlossenen Zustand einer mit der Fahrzeugtürbaugruppe gebildeten Fahrzeugtür ist somit beispielsweise ein Abschnitt vorgesehen, der in Richtung eines Fahrzeuginnenraums gegenüber wenigstens einem angrenzenden Abschnitt eines Fensterrahmens zurückgesetzt ist, um das Ansetzen eines scheibenseitigen Führungselements an ein zugeordnetes rahmenseitiges Führungselements von oben zu erleichtern oder sogar erst zu ermöglichen. So kann über einen zurückgesetzten Abschnitt des oberen Rahmenteils ein Einführbereich des jeweiligen Führungselements von oben her zugänglich gemacht sein, um die bereits mit den scheibenseitigen Führungselementen verbundene Fensterscheibe von oben an die rahmenseitigen Führungselemente ohne Kippen oder Schrägstellung der Fensterscheibe in den Türrahmenträger einsetzen zu können.

Durch das wenigstens lokal zurückgesetzte Rahmenteil eines türseitigen Fensterrahmens wird ermöglicht, dass die Fensterscheibe auch mit ihrer Scheibenoberkante flächenbündig mit einem oberen Karosserieteil abschließen kann, um einen ästhetisch besonders ansprechenden Gesamteindruck zu erzielen. Der beispielsweise als Aussparung oder Ausklinkung ausgeführte zurückgesetzte Abschnitt des oberen Rahmenteils wird dann über das Verschlussteil verschlossen, vorzugsweise dichtend.

Der zurückgesetzte Abschnitt kann sich über eine Länge an dem oberen Rahmenteil - vorzugsweise am Rand der Fensteröffnung entlang - erstrecken, die größer ist als die Hälfte des Abstands zwischen den ersten und zweiten seitlichen Rahmenteilen. Eine Länge des oberen Rahmenteils wird hierbei entlang einer Erstreckungsrichtung von einem der seitlichen Rahmenteile zu dem anderen Rahmenteil gemessen. Bei dieser Variante ist das obere Rahmenteil somit nicht nur lokal und mithin nur über einen Bruchteil einer Gesamtlänge des oberen Rahmenteils zurückgesetzt, sondern vielmehr über einen Großteil des oberen Rahmenteils. Hierüber kann eine einfachere Montage der Fensterscheibe und ein erleichtertes Vorbeiführung der Fensterscheibe bei der Montage an dem oberen Rahmenteil vorbei gegeben sein.

Anstatt das wenigstens eine Verschlussteil im Bereich eines oberen Rahmenteils anzubringen, kann das wenigstens eine Verschlussteil wenigstens einen Teil des oberen Rahmenteils bilden. Das nachträglich, d.h., nach der Montage der Fensterscheibe an die seitlichen Rahmenteile des Türrahmenträgers angebrachte Verschlussteil bildet somit einen versteifenden Teil des Fensterrahmens der Fahrzeugtür. Hierfür werden über das Verschlussteil Bereiche der beiden sich gegenüberliegenden seitlichen Rahmenteile miteinander verbunden und ein Fensterrahmen der Fahrzeugtür durch das Verschlussteil vervollständigt.

Unabhängig davon, ob das wenigstens eine Verschlussteil an einem oberen Rahmenteil angebracht wird oder selbst einen Teil eines solchen oberen Rahmenteils des Fensterrahmens bildet, kann das Verschlussteil wenigstens einen Abschnitt aufweisen, der im bestimmungsgemäß angebrachten Zustand des Verschlussteils in Richtung des Türkastens vorsteht. Über den wenigstens einen vorstehenden Abschnitt kann bei bestimmungsgemäß angebrachtem Verschlussteil ein Einführbereich zumindest teilweise, gegebenenfalls auch vollständig, insbesondere dichtend verschlossen und/oder überdeckt sein. Alternativ oder ergänzend kann der wenigstens eine vorstehende Abschnitt für eine Verbindung des Verschlussteils mit einem der seitlichen Rahmenteile eingerichtet und vorgesehen sein. Im zuletzt genannten Fall kann der vorstehende Abschnitt beispielsweise ein Knotenblech für die Verbindung mit einem seitlichen Rahmenteil umfassen.

Bei einem an dem Verschlussteil vorgesehenen, vorstehenden Abschnitt zum Verschließen und/oder Abdecken eines Einführbereiches ist der vorstehende Abschnitt in einem Ausführungsbeispiel als an einem Träger des Verschlussteils angebrachtes Formteil ausgeführt. Ein solches Formteil kann zum Beispiel an den Träger des Verschlussteils angeformt, insbesondere anvulkanisiert sein. Hierbei kann das Formteil auch aus einem anderen Material gebildet sein als der Träger des Verschlussteils, beispielsweise aus einem (anderen) Material, insbesondere aus einem weniger steifen (Kunststoff-) Material.

In einer Ausführungsvariante ist vorgesehen, dass das Verschlussteil eine Dichtung für eine Scheibenoberkante der Fensterscheibe aufweist. Eine solche in das Verschlussteil integrierte oder hieran zumindest fixierte Dichtung dient somit im geschlossenen Zustand der Fensterscheibe zur Bereitstellung einer Abdichtung der Fensteröffnung im Bereich der Scheibenoberkante. Beispielsweise ist eine solche Dichtung derart ausgebildet, dass die Fensterscheibe im geschlossenen Zustand im Bereich ihrer Scheibenoberkante mit einer Innenseite an einer Dichtlippe der Dichtung dichtend anliegt, während an der Außenseite der Fensterscheibe im Bereich der Scheibenunterkante allenfalls ein schmaler Dichtungsrand der Dichtung vorgesehen ist, um den flächenbündigen Abschluss zum oberen Rand der Fahrzeugtür nicht zu beeinträchtigen.

Zur erleichterten Montage kann das Verschlussteil in einem Ausführungsbeispiel an wenigstens eines der ersten und zweiten seitlichen Rahmenteile und/oder an ein die ersten und zweiten Rahmenteile miteinander verbindendes oberes Rahmenteil steckbar sein. Ein Auf- oder Anstecken des Verschlussteils erfolgt hierbei beispielsweise ebenfalls von oben. Gegebenenfalls kann eine Anbringungsrichtung des Verschlussteils jedoch auch schräg oder quer zu einer Hochachse der Fahrzeugtür verlaufen, sodass das Verschlussteil beispielsweise von vorne an ein oberes Rahmenteil angesteckt wird.

In einem Ausführungsbeispiel weist das Verschlussteil ein längserstrecktes Leistenelement auf, das bei bestimmungsgemäßer Anbringung des Verschlussteils an dem Türrahmenträger einen oberen, an der Außenseite der Fahrzeugtür sichtbaren Abschluss der Fensteröffnung bildet. Das Verschlussteil bleibt somit mit wenigstens einer Seitenfläche an der zusammengebauten Fahrzeugtür sichtbar und bildet somit ein Dekor- oder Verkleidungsteil der Fahrzeugtür.

Das Verschlussteil kann grundsätzlich aus Kunststoff oder Metall gefertigt sein und, wie bereits obig erläutert, eine hieran befestigte oder angeformte, zum Beispiel angespritzte Dichtung umfassen. Das Verschlussteil kann auch zumindest teilweise aus einem Gummimaterial gefertigt sein. Hierbei übernimmt das Verschlussteil keine tragende Funktion im Bereich des Fensterrahmens der Fahrzeugtür. Vielmehr steht bei einem zumindest teilweise aus einem Gummimaterial hergestellten Verschlussteil neben einer Verschlussfunktion für wenigstens einen Einführbereich der rahmenseitigen Führungselemente eine Dichtfunktion im Bereich der Scheibenoberkante bei geschlossener Fensterscheibe im Vordergrund.

In einer Ausführungsvariante sind, bei bestimmungsgemäß in ein Fahrzeug eingebauter Fahrzeugtür, das erste seitliche Rahmenteil im Bereich einer A-Säule des Fahrzeugs und das zweite seitliche Rahmenteil im Bereich einer B-Säule angeordnet. Die Fahrzeugtürbaugruppe ist somit Teil einer vorderen Fahrer- oder Beifahrertür des Fahrzeugs. Selbstverständlich ist die erfindungsgemäße Lösung hierauf nicht beschränkt. So kann eine erfindungsgemäß ausgestaltete Fahrzeugtürbaugruppe auch für eine hintere Fahrzeugtür vorgesehen sein.

In einem Ausführungsbeispiel der Fahrzeugtürbaugruppe für eine Fahrer- oder Beifahrertür erstreckt sich das Verschlussteil oberhalb eines im Bereich der A-Säule vorgesehenen Spiegeldreieckes der Fahrzeugtür. Hierbei kann sich somit das Verschlussteil an wenigstens einer Kante dieses Spiegeldreieckes entlang erstrecken. Insbesondere in dieser Ausführungsvariante ist das Verschlussteil längserstreckt ausgeführt und kann sich - beispielsweise als Türrahmenleiste oder als oberes Rahmenteil des Fensterrahmens - oberhalb des Türkastens über die gesamte Länge der Fahrzeugtür erstrecken.

Ein weiterer Aspekt der Erfindung ist die Bereitstellung eines Montageverfahrens gemäß dem Anspruch 18.

Hiernach ist ein Verfahren zur Montage einer Fahrzeugtürbaugruppe vorgeschlagen, die eine verstellbare Fensterscheibe für einen Fahrzeugfensterheber sowie einen Türrahmenträger aufweist, wobei die Fensterscheibe in einem geschlossenen Zustand flächenbündig zu oberen und/oder seitlichen Karosserieteilen vorliegt, die eine durch die Fensterscheibe zu schließende Fensteröffnung einer Fahrzeugtür beranden. Das Montageverfahren betrifft somit Fahrzeugtürbaugruppen für ein sogenanntes flächenbündiges Scheibenkonzept (englisch: "flush glass" oder "flush glazing"). Der Türrahmenträger definiert ferner einen Türkasten unterhalb der Fensteröffnung, in den hinein die Fensterscheibe zum Öffnen abgesenkt wird. Ferner weist der Türrahmenträger wenigstens zwei seitliche Rahmenteile auf, die einander oberhalb des Türkastens an der Fensteröffnung gegenüberliegen. Das erfindungsgemäße Verfahren umfasst hierbei nun wenigstens die nachfolgenden Schritte:
- Bereitstellen des Türrahmenträgers mit einem ersten rahmenseitigen Führungselement zur seitlichen Führung der Fensterscheibe an einem der seitlichen Rahmenteile und einem zweiten rahmenseitigen Führungselement zur seitlichen Führung der Fensterscheibe an dem anderen der seitlichen Rahmenteile,
- Bereitstellen von ersten und zweiten scheibenseitigen Führungselementen, über die die Fensterscheibe an den rahmenseitigen Führungselementen verschieblich gehalten ist,
- Vorsehen der ersten und zweiten rahmenseitigen Führungselemente mit jeweils einem Einführbereich oberhalb des Türkastens und Ansetzen der ersten und zweiten scheibenseitigen Führungselemente von oben an die ersten und zweiten rahmenseitigen Führungselemente in dem jeweiligen Einführbereich, um die Fensterscheibe an den Türrahmenträger zu montieren, und
- Verschließen wenigstens eines der Einführbereiche der ersten und zweiten rahmenseitigen Führungselemente durch wenigstens ein Verschlussteil, nachdem die scheibenseitigen ersten und zweiten Führungselemente an die ersten und zweiten rahmenseitigen Führungselemente angesetzt wurden.

Ein erfindungsgemäßes Montageverfahren kann dabei insbesondere zur Montage einer erfindungsgemäß ausgestalteten Fahrzeugtürbaugruppe genutzt werden. Folglich gelten vorstehend und nachstehend angegebene Vorteile und Merkmale für Ausführungsvarianten einer erfindungsgemäßen Fahrzeugtürbaugruppe auch für Ausführungsvarianten eines erfindungsgemäßen Montageverfahrens und umgekehrt.

Vorzugsweise sind die ersten und zweiten scheibenseitigen Führungselemente bereits an der Fensterscheibe fixiert, wenn die ersten und zweiten scheibenseitigen Führungselemente an die ersten und zweiten rahmenseitigen Führungselemente angesetzt werden. Die Fixierung der scheibenseitigen Führungselemente an der Fensterscheibe erfolgt hierbei an seitlichen Scheibenkanten der Fensterscheibe, beispielsweise mittels einer Verklebung.

Entsprechend den obigen Erläuterungen kann auch bei einer Ausführungsvariante eines erfindungsgemäßen Montageverfahrens ein oberes Rahmenteil für einen Fensterrahmen der Fahrzeugtür vorgesehen sein, das die ersten und zweiten seitlichen Rahmenteile des Türrahmenträgers oberhalb des Türkastens miteinander verbindet. Hierbei kann das obere Rahmenteil entweder bereits einen Teil des Türrahmenträgers bilden, bevor die Fensterscheibe hieran montiert wird. Alternativ bildet das Verschlussteil ein oberes Rahmenteil aus, das erst nach Montage der Fensterscheibe mit den seitlichen Rahmenteilen des Fensterrahmens verbunden wird.

So kann nach der erstgenannten Variante das obere Rahmenteil im Einführbereich wenigstens eines rahmenseitigen Führungselements einen Abschnitt ausbilden, der gegenüber einem angrenzenden Abschnitt des oberen Rahmenteils und/oder gegenüber einem angrenzenden Abschnitt eines seitlichen Rahmenteils zurückgesetzt ist, und zwar im Wesentlichen senkrecht und/oder parallel zu einer Scheibenebene, entlang der sich die montierte Fensterscheibe im geschlossenen Zustand erstreckt. Das Verschlussteil wird hierbei dann bevorzugt an dem oberen Rahmenteil wenigstens im Bereich des zurückgesetzten Abschnitts angebracht, um den zurückgesetzten Abschnitt zu überdecken und/oder zu verschließen.

In der zuvor genannten zweiten Alternative kann das wenigstens eine Verschlussteil wenigstens einen Teil des oberen Rahmenteils bilden und ein durch den Türrahmenträger definierter Teil eines Fensterrahmens für eine Fensteröffnung ohne das angebrachte Verschlussteil nach oben hin offen sein, um das Einführen der Fensterscheibe mit hieran fixierten ersten und zweiten scheibenseitigen Führungselementen von oben zu erleichtern. Das Verschlussteil wird dann nach der Montage der Fensterscheibe angebracht und mit den ersten und zweiten seitlichen Rahmenteilen verbunden, wodurch dann der Fensterrahmen der Fahrzeugtür vervollständigt wird, sodass dieser oberhalb des Türkastens und mithin oberhalb einer Fensterbrüstung im Wesentlichen U-förmig erscheint.

An wenigstens eines der Rahmenteile kann im Laufe des Montage der Fahrzeugtürbaugruppe noch eine Blende angebracht werden. Beispielsweise ist eine solche Blende der Fahrzeugtürbaugruppe an einem B-säulennahen Rahmenteil vorgesehen. Eine Blende kann hierbei vor oder nach der Montage der Fensterscheibe an den Türrahmenträger an das zugehörige Rahmenteil montiert werden.

Mögliche Ausführungsvarianten der erfindungsgemäßen Lösung sind ferner anhand der beigefügten Figuren veranschaulicht.

Hierbei zeigen:
- Figur 1: eine Ausführungsvariante einer erfindungsgemäßen Fahrzeugtürbaugruppe in Explosionsdarstellung;
- Figur 2: eine mit der Fahrzeugtürbaugruppe gebildete Fahrzeugtür in Seitenansicht;
- Figur 3A: in Seitenansicht eine Fensterscheibe der Fahrzeugtürbaugruppe mit hieran fixierten scheibenseitigen Führungselementen;
- Figuren 3B-3C: vergrößerte Ausschnitte der Fensterscheibe der Figuren 3A und 3B jeweils mit Blick auf ein scheibenseitiges Führungselement;
- Figuren 4A-4B: ausschnittsweise die Fensterscheibe bei der Montage an rahmenseitige Führungselemente eines Türrahmenträgers der Fahrzeugtürbaugruppe unter Ansetzen der scheibenseitigen Führungselemente an die rahmenseitigen Führungselemente;
- Figur 5A: in Seitenansicht die Fahrzeugtür der Figur 2 mit Hervorhebung eines A-säulennahen Bereichs;
- Figuren 5B-5D: in verschiedenen Ansichten Details zur Gestaltung des Fensterrahmens sowie der rahmenseitigen und scheibenseitigen Führungselemente in dem A-säulennahen Bereich der Fahrzeugtür;
- Figur 6A: in Seitenansicht die Fahrzeugtür der Figur 2 mit Hervorhebung eines B-säulennahen Bereichs;
- Figuren 6B bis 6D: in verschiedenen Ansichten Details des Fensterrahmens der Fahrzeugtür sowie der rahmenseitigen und scheibenseitigen Führungselemente in dem B-säulennahen Bereich;
- Figur 7A: die Fahrzeugtür der Figur 2 in Seitenansicht mit Hervorhebung von A- und B-säulennahen Bereichen eines oberen Rahmenteils eines Fensterrahmens der Fahrzeugtür;
- Figuren 7B-7C: im vergrößerten Maßstab und perspektivischer Ansicht das obere Rahmenteil des Fensterrahmens in dem A- und B-säulennahen Bereich der Fahrzeugtür;
- Figur 8A: in perspektivischer Einzeldarstellung ein Verschlussteil der Fahrzeugtürbaugruppe zur Anbringung an einem oberen Rahmenteil des Fensterrahmens des Türrahmenträgers mit hieran angeformten Formteilen;
- Figur 8B: eine alternative Ausführungsvariante des Verschlussteils der Figur 8A ohne hieran angeformte Formteile;
- Figur 9: das Verschlussteil der Figur 8A oder 8B in bestimmungsgemäß an einem oberen Rahmenteil angebrachtem Zustand in geschnittener Darstellung;

- Figur 10A: in Explosionsdarstellung eine weitere Ausführungsvariante einer erfindungsgemäßen Fahrzeugtürbaugruppe mit einem Verschlussteil, das ein oberes Rahmenteil des Fensterrahmens der Fahrzeugtür bildet;
- Figur 10B: in Seitenansicht eine aus der Fahrzeugtürbaugruppe der Figur 10A gebildete Fahrzeugtür im zusammengebauten Zustand;
- Figur 11: schematisch die Fahrzeugtür der Figuren 2 und 10B in Seitenansicht;
- Figur 12: schematische Draufsicht von oben auf ein oberes Rahmenteil nach dem Stand der Technik;
- Figuren 13A-13C: schematisch und in der Draufsicht unterschiedliche Gestaltungen eines oberen Rahmenteils für mögliche Ausführungsvarianten einer erfindungsgemäßen Fahrzeugtürbaugruppe.

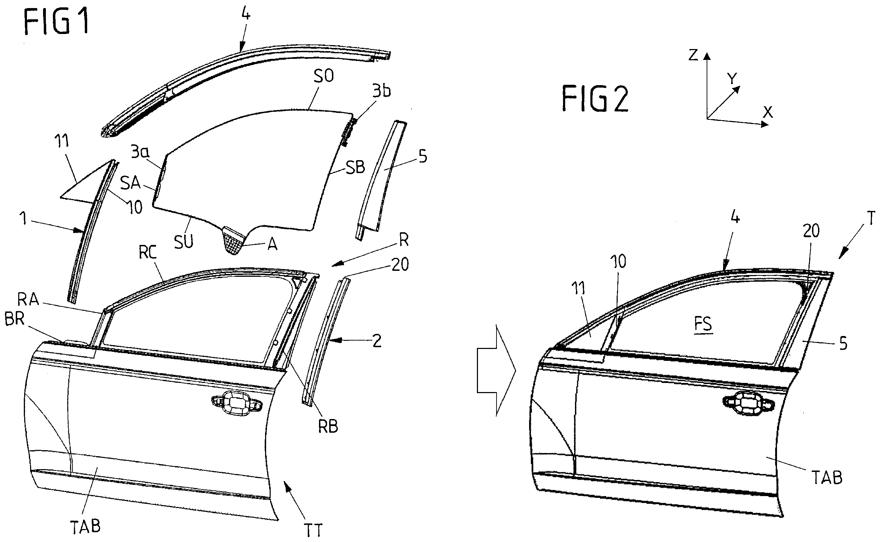

Die Figur 1 zeigt in Explosionsdarstellung eine Ausführungsvariante einer erfindungsgemäßen Fahrzeugtürbaugruppe. Diese Fahrzeugtürbaugruppe umfasst unter anderem einen Türrahmenträger TT mit einer Türaußenhaut in Form eines Türaußenblech TAB zur Definition eines Türkastens. Der Türrahmenträger TT ist zweischalig ausgebildet, d.h., das Türaußenblech TAB ist unter Bildung des Türkastens mit einer Türinnenhaut in Form eines Türinnenblechs verbunden. Hierbei ist ein Hohlraum über den Türrahmenträger TT ein Hohlrahm in der Fahrzeugtür definiert, in den eine Fensterscheibe FS zum Öffnen abgesenkt werden kann.

Oberhalb eines Brüstungsbereichs BR bildet der Türrahmenträger TT einen Fensterrahmen R für diese Fensterscheibe FS aus. Der Fensterrahmen R weist hierbei zwei sich an einer durch den Fensterrahmen R definierten Fensteröffnung O einander gegenüberliegende seitliche Rahmenteile RA und RB auf sowie ein die beiden seitlichen Rahmenteile RA und RB oberhalb des Brüstungsbereichs BR miteinander verbindendes oberes Rahmenteil RC. Das obere Rahmenteil RC wird üblicherweise auch als oberer Teil des Türrahmens der Fahrzeugtür T bezeichnet.

Die durch den Fensterrahmen R definierte Fensteröffnung O soll im zusammengebauten Zustand einer Fahrzeugtür T durch die verschieblich geführte Fensterscheibe FS verschlossen werden können. Die Fensterscheibe FS kann hierbei zum Absenken in den Türkasten des Türrahmenträgers TT abgesenkt werden, und zwar in den gebildeten Hohlraum der Fahrzeugtür T. Um die Fensterscheibe FS hierbei manuell oder fremdkraftbetätigt entlang einer Verstellbahn anzuheben und abzusenken, ist ein hier nicht näher dargestellter Fahrzeugfensterheber vorgesehen und innerhalb des Türkastens untergebracht. Hierbei greift ein Antriebsmittel des Fahrzeugfensterhebers, zum Beispiel ein flexibles Zugmittel in Form eines Seilzugs, an einem Mitnehmerelement an, das mit einem Scheibenadapter A der Fensterscheibe FS verbunden ist. Der Scheibenadapter A ist hierfür an einem Vorsprung an einer Scheibenunterkante SU der Fensterscheibe FS fixiert und überträgt eine Verstellkraft des mit dem Scheibenadapter verbunden Mitnehmers an die Fensterscheibe FS, um diese anzuheben oder abzusenken.

Die Fensterscheibe FS ist vorliegend Teil eines flächenbündigen Scheibenkonzepts, bei dem die Fensterscheibe FS in einem geschlossenen Zustand flächenbündig zu oberen und/oder seitlichen Karosserieteilen des Fahrzeugs vorliegt, die die durch die Fensterscheibe FS zu schließende Fensteröffnung O der Fahrzeugtür T beranden. Hierbei schließt sich eine Oberfläche oberer und/oder seitlicher Karosserieteile am jeweiligen Rand der Fensterscheibe FS derart an, dass die jeweilige Oberfläche bündig an die von der Fensterscheibe FS aufgespannte Scheibenebene anschließt. Hierdurch wird der Eindruck einer durchgehenden Scheiben- und Karosseriefläche erzeugt. Die geschlossene Fensterscheibe FS liegt hierbei somit nicht gegenüber seitlichen und oberen Karosserieteilen zurückgesetzt vor. Üblicherweise spricht man in diesem Zusammenhang auch von "flush glass" oder "flush glazing".

Um die Fensterscheibe FS bei einem derartigen flächenbündigen Scheibenkonzept oberhalb des Türkastens und somit oberhalb des Brüstungsbereichs BR verschieblich zu führen und an dem Fensterrahmen R zu halten, sind an der Fensterscheibe FS im Bereich sich gegenüberliegender seitlicher Scheibenkanten SA und SB scheibenseitige Führungselemente 3a und 3b in Form so genannter "Pin guides" fixiert. Diese scheibenseitigen Führungselemente 3a und 3b sind in seitlichen Führungselementen 1 und 2 des Fensterrahmens R jeweils verschieblich geführt.

Die seitlichen Führungselemente sind hierbei als Führungsleisten 1 und 2 ausgeführt, die als separate Bauteile jeweils an einem zugeordneten seitlichen Rahmenteil RA oder RB fixiert sind. Bei der durch die dargestellte Fahrzeugtürbaugruppe zu bildende Fahrzeugtür T handelt es sich um eine Fahrertür eines Fahrzeugs. Demgemäß ist ein erstes (vorderes) seitliches Rahmenteil RA im bestimmungsgemäß eingebauten Zustand der Fahrzeugtür T im Bereich der A-Säule vorgesehen. Das an der Fensteröffnung O diesem ersten seitlichen Rahmenteil RA gegenüberliegende zweite (hintere) Rahmenteil RB liegt somit im Bereich einer B-Säule vor, wenn die Fahrzeugtür T bestimmungsgemäß eingebaut ist.

Die an diesen Rahmenteilen RA, RB angebrachten Führungsleisten 1 und 2 bilden jeweils einem Führungskanal 10 oder 20 für die seitlichen scheibenseitigen Führungselemente 3a oder 3b der Fensterscheibe FS aus. Hierbei erstrecken sich die Führungsleisten 1 und 2 jeweils auch bis in das Innere des Türkastens des Türrahmenträgers TT, um hierüber auch innerhalb des Türkastens eine Führung für die Fensterscheibe FS bereitzustellen.

Bei bisher bekannten Fahrzeugtürbaugruppen für ein flächenbündiges Scheibenkonzept mit einer im Bereich ihrer seitlichen Scheibenkanten SA und SB geführten Fensterscheibe FS wird die Fensterscheibe FS üblicherweise von unterhalb des Brüstungsbereichs BR, d.h., im Bereich des Türkastens angebracht. Hierbei werden die bereits an der Fensterscheibe FS, zum Beispiel mittels einer Klebung, fixierten scheibenseitigen Führungselemente 3a und 3b von unten in einen jeweils zugehörigen Führungskanal 10 oder 20 einer Führungsleiste 1 oder 2 eingefädelt und die Fensterscheibe FS dann in Richtung einer geschlossenen Position nach oben verschoben. Hierfür ist dann das Türaußenblech TAB nur nachträglich an den Türrahmenträger TT montierbar. Das Türaußenblech TAB kann somit vor Montage der Fensterscheibe FS an den Türrahmenträger TT nicht bereits an diesem vorhanden sein, wie es bei üblichen Türkonzepten für nicht-flächenbündige Scheibenkonzepte üblich ist. Es ist vielmehr ein besonderer Aufbau der Fahrzeugtür T und des Türrahmenträgers TT nötig.

Mit der in Figur 1 dargestellten Ausführungsvariante einer erfindungsgemäßen Fahrzeugtürbaugruppe ist demgegenüber eine Montage der Fensterscheibe mit hieran bereits fixierten scheibenseitigen seitlichen Führungselementen 3a und 3b von oben an den die Türaußenhaut TAB aufweisenden Türrahmenträger TT möglich. Hierbei sind an den seitlichen Rahmenteile RA und RB auch bereits die zugehörigen Führungsleisten 1 und 2 fixiert, bevor die Fensterscheibe FS hieran eingeschoben wird. Beide seitlichen Führungsleisten 1 und 2 weisen hierfür im Bereich des oberen Rahmenteils RC einen Einführbereich auf, über den die scheibenseitigen Führungselemente 3a und 3b in den jeweiligen Führungskanal 10 oder 20 einer Führungsleiste 1 oder 2 von oben eingeschoben werden können. Im einfachsten Fall ist hierfür eine als längserstrecktes Profil ausgeführte Führungsleiste 1 oder 2 zu ihrem oberen Ende hin offen, sodass der jeweilige Führungskanal 10 oder 20 von oben her zugänglich ist, um ein scheibenseitige Führungselemente 3a oder 3b von oben einzuschieben. Alternativ ist im Bereich eines Endes der jeweiligen Führungsleiste 1 oder 2 eine Ansparung vorgesehen, über die das Einfädeln eines scheibenseitigen Führungselements 3a oder 3b in den jeweiligen Führungskanal 10 oder 20 von oben erfolgen kann.

Um über das obere Rahmenteil RC des Fensterrahmens R das Ansetzen der scheibenseitigen Führungselemente 3a und 3b an die zugehörigen rahmenseitigen Führungselemente 1 und 2 und deren jeweiligen Führungskanal 10 oder 20 zu ermöglichen, weist das obere Rahmenteilen RC an dem Einführbereich eines rahmenseitigen Führungselements 1 oder 2 - somit vorliegend an dem jeweiligen Ende des Führungselements 1 oder 2 - jeweils einen zumindest lokal zurückgesetzten Abschnitt auf. Der Abschnitt ist hierbei im Wesentlichen senkrecht zu der Scheibenebene der Fensterscheibe FS nach innen zurückgesetzt, sodass die Fensterscheibe FS mit den hieran seitlich und nach innen vorstehenden scheibenseitigen Führungselementen 3a und 3b an dem oberen Rahmenteil RC vorbei geführt und die scheibenseitigen Führungselemente 3a und 3b an dem oberen Rahmenteilen RC vorbei in den jeweils zugeordneten Führungskanal 10 oder 20 von oben eingeschoben werden können.

Um nach der Montage der Fensterscheibe FS an den Türrahmenträger TT die durch die Führungsleisten 1 und 2 mithilfe des oberen Rahmenteilen RC zur Verfügung gestellten Einführbereiche zu verschließen und in einem geschlossenen Zustand der Fensterscheibe FS den Fensterrahmen R auch nach oben hin in flächenbündig mit der Fensterscheibe FS abschließen zu lassen, ist ein Verschlussteil in Form einer Türrahmenleiste 4 vorgesehen. Diese Türrahmenleiste 4 ist längserstreckt ausgebildet. Sie bildet eine den Fahrzeugtürkorpus nach oben hin abschließende Leiste, die sich nicht nur entlang einer Scheibenoberkante SO der geschlossenen Fensterscheibe FS erstreckt, sondern insbesondere auch über ein an der ersten, vorderen Führungsleiste 1 vorgesehenes Spiegeldreieck 11. Dabei erstreckt sich die Türrahmenleiste 4 bis zu einem vorderen Ende des Brüstungsbereichs BR. Die Türrahmenleiste 4 wird - ebenfalls von oben - auf den Fensterrahmen R des Türrahmenträgers TT aufgesteckt und an dem oberen Rahmenteil RC fixiert.

Vor Anbringung der Türrahmenleiste 4 und gegebenenfalls bereits vor Montage der Fensterscheibe FS an den Türrahmenträger TT ist vorliegend noch ein Blendenelement 5 an dem zweiten, hinteren Rahmenteil RB und/oder dessen Führungsleiste 2 zu fixieren. Über dieses Blendenelement 5 wird zur Karosserieaußenseite hin im Bereich der B-Säule ein mit der geschlossenen Fensterscheibe FS flächenbündiger Abschluss der Fahrzeugtür T hergestellt. Dies ist insbesondere anhand der Figur 2 ersichtlich, die die zusammengebaute Fahrzeugtür T in Seitenansicht zeigt.

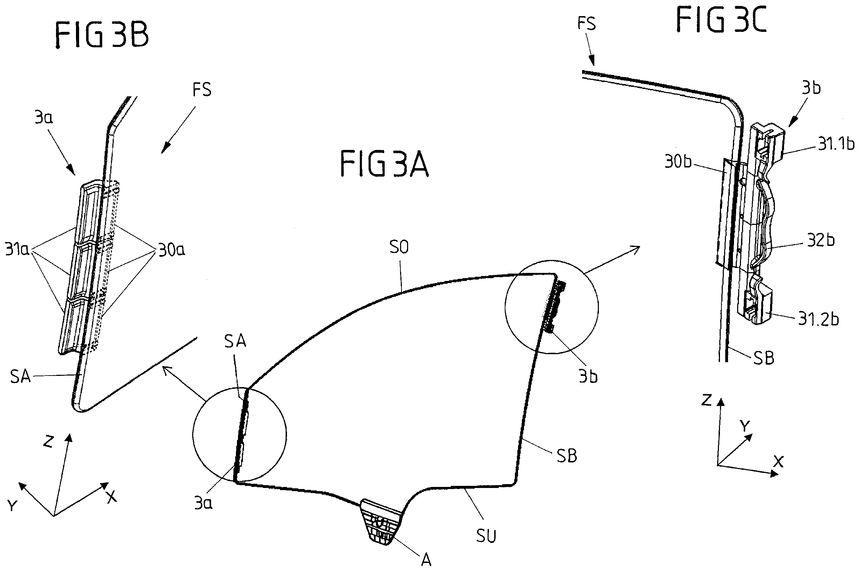

Die Figuren 3A bis 3C, 4A bis 4B, 5A bis 5D, 6A bis 6D, 7A bis 7C, 8A bis 8B und 9 zeigen weitere Details der zuvor beschriebenen Ausführungsvariante einer erfindungsgemäßen Fahrzeugtürbaugruppe.

Mit den Figuren 3A, 3B und 3C ist hierbei zunächst die Fensterscheibe FS mit den hieran fixierten scheibenseitigen Führungselemente 3a und 3b sowie ihrem Scheibenadapter A veranschaulicht. In den Figuren 3B und 3C ist jeweils ein scheibenseitiges Führungselement 3a oder 3b in vergrößertem Maßstab dargestellt.

Ein an der A-säulennahen seitlichen Scheibenkante SA mittels Klebung fixiertes (vorderes) Führungselement 3a dient dabei der Führung der Fensterscheibe FS ausschließlich entlang der Y-Richtung quer zur Scheibenebene der Fensterscheibe FS. Hierbei weist das vordere scheibenseitige Führungselemente 3a eine Basis 30a auf, über die das vordere scheibenseitige Führungselement 3a innen an der Fensterscheibe FS nahe der vorderen seitlichen Scheibenkante SA festgeklebt ist. Von dieser Basis 30a erstrecken sich mehrere an der Innenseite der Fensterscheibe FS L-förmig vorstehende Führungsabschnitte 31a. Jeder dieser L-förmigen Führungsabschnitte 31a weist dabei einen über die vordere seitliche Scheibenkante SA überstehenden Bereich auf, über den das vordere scheibenseitige Führungselemente 3a in den Führungskanal 10 der Führungsleiste 1 eingreifen und hierüber an der ersten Führungsleiste 1 verschieblich geführt werden kann.

An der gegenüberliegenden (hinteren) seitlichen Scheibenkante SB der Fensterscheibe FS ist das wenigstens eine andere (hintere) zweite Führungselement 3b an die Innenseite der Fensterscheibe FS geklebt. Hierfür weist auch das hintere scheibenseitige Führungselement 3b eine Basis 30b auf. Von der an die Innenseite der Fensterscheibe FS geklebten Basis 30b erstreckt sich ein Abschnitt des zweiten scheibenseitigen Führungselements 3b über die hintere seitliche Scheibenkante SB, sodass das zweite, hintere scheibenseitige Führungselement 3b über die hintere seitliche Scheibenkante SB der Fensterscheibe FS vorsteht. Der vorstehende Teil des hinteren scheibenseitigen Führungselements 3b bildet dabei zwei vorliegend quaderförmige Führungsabschnitte 31.1b und 31.2b aus, die in den Führungskanal 20 der 2. Führungsleiste 2 eingeschoben und hierin verschiebliche gehalten werden können. Die Führungsabschnitte 31.1b und 31.2b liegen hierbei bezogen auf eine Längserstreckungsrichtung des hinteren Führungsleiste 2 übereinander. Über die formschlüssig in dem Führungskanal 20 aufgenommenen Führungsabschnitte 31.1b und 31.2b wird eine körperliche Führung des zweiten, hinteren scheibenseitigen Führungselements 3b und damit der Fensterscheibe FS an der zweiten Führungsleiste 2 sowohl in Y-Richtung (d.h. quer zur Scheibenebene) als auch in X-Richtung (d.h. parallel zur Scheibenebene und im Wesentlichen senkrecht zur Verstellrichtung der Fensterscheibe FS) bereitgestellt.

Zwischen den beiden Führungsabschnitte 31.1b und 31.2b bildet das zweite, hintere scheibenseitige Führungselement 3b noch einen Federabschnitt 32b aus. Hierüber ist das zweite, hintere scheibenseitige Führungselement 3b entlang der bei bestimmungsgemäß an einem Fahrzeug angebrachten Fahrzeugtür T im Wesentlichen parallel zu einer Fahrzeuglängsrichtung verlaufenden X-Richtung federnd abgestützt. Durch eine federnde Anlage des zweiten, hinteren scheibenseitigen Führungselements 3b an der zugeordneten zweiten Führungsleiste 2 entlang der X-Richtung wird ein Spielausgleich bereitgestellt. Die federnde Anlage dient ferner dem Klapperschutz und damit zur Vermeidung unerwünschter Klappergeräusche bei an den Türrahmenträger TT bestimmungsgemäß montierter Fensterscheibe FS.

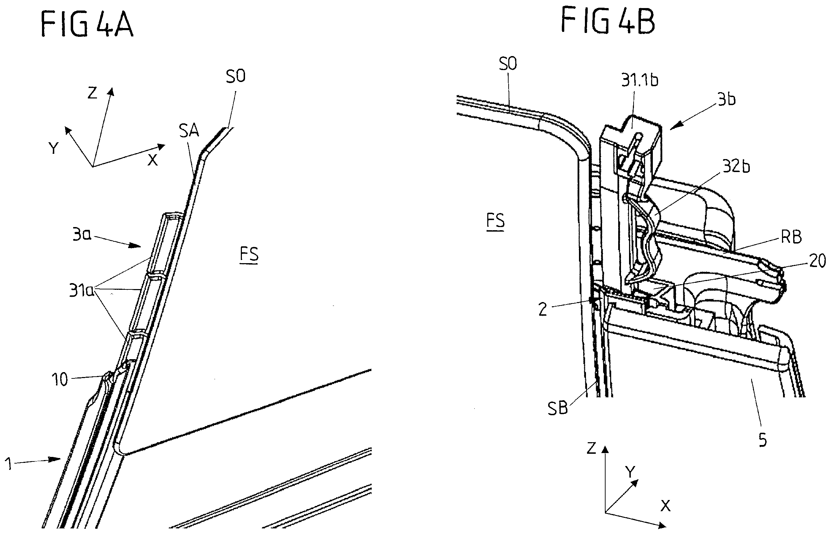

Anhand der Detaildarstellungen der Figuren 4A und 4B ist jeweils perspektivisch, mit Blick auf die oberen Einführbereiche der Führungsleisten 1 und 2 das Ansetzen der bereits an der Fensterscheibe FS fixierten vorderen und hinteren scheibenseitigen Führungselemente 3a und 3b in die jeweils zugehörige Führungsleiste 1 oder 2 veranschaulicht. Die Figuren zeigen auch, wie der Fensterrahmen R mit seinen beiden seitlichen Rahmenteilen RA und RB und dem diese verbindenden oberen Rahmenteil RC an dem jeweiligen oberen, offenen Ende einer Führungsleiste 1 oder 2 zurückgesetzt ist, um die scheibenseitigen Führungselemente 3a und 3b von oben in die Führungskanäle 10 und 20 der Führungsleisten 1 und 2 einfädeln zu können. Anhand der Figur 4B ist hierbei im übrigen veranschaulicht, dass vorliegend bereits das Blendenselement 5 an dem hinteren Rahmenteilen RB fixiert ist, bevor die Fensterscheibe FS an den Türrahmenträger TT montiert wird.

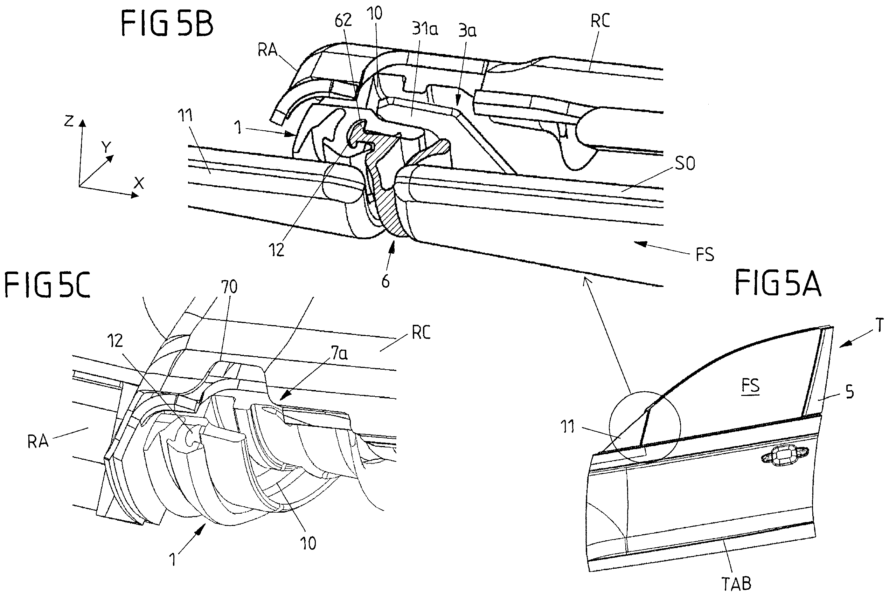

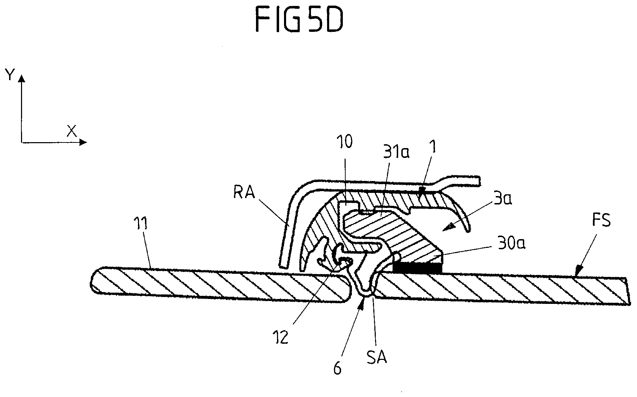

Mit den Figuren 5A bis 5D ist in unterschiedlichen Ansichten und teilweise in nochmals vergrößertem Maßstab der A-säulennahe Bereich des Fensterrahmens R des Türrahmenträgers TT mit der bereits montierten Fensterscheibe FS veranschaulicht. Hierbei ist insbesondere anhand der Figur 5C ein zurückgesetzter Abschnitt 7a des oberen Rahmenteils RC ersichtlich, über den das Vorbeiführen des ersten, vorderen scheibenseitigen Führungselements 3a an dem oberen Rahmenteilen RC vorbei und das Einfädeln in den nach oben offenen Führungskanal 10 der Führungsleiste 1 ermöglicht wird. Dieser zurückgesetzter Abschnitt 7a weist vorliegend eine noch nach innen gerichteten zusätzlichen Rücksprung 70 auf, um die von der Innenseite der Fensterscheibe FS vorstehenden Führungsabschnitte 31a des ersten, vorderen scheibenseitigen Führungselements 3a leichter in den Führungskanal 10 einführen zu können.

Aus den Ansichten der Figuren 5B bis 5D ist ferner noch ersichtlich, dass die vordere Führungsleiste 1 auch noch einen Befestigungskanal 12 für die Fixierung eines Dichtelements in Form einer Spaltdichtung 6 ausbildet. Die Spaltdichtung 6 ist hierbei in einem sich zwingend ergebenden, schmalen Spalt zwischen dem Spiegeldreieck 11 und der Fensterscheibe FS vorgesehen und stellt eine Abdichtung im Bereich der vorderen seitlichen Scheibenkante SA bereit. Zur Fixierung der Spaltdichtung 6 weist diese einen stegartig vorspringenden Befestigungsabschnitt 62 auf, der in dem Befestigungskanal 12 der Führungsleiste 1 formschlüssig aufgenommen ist.

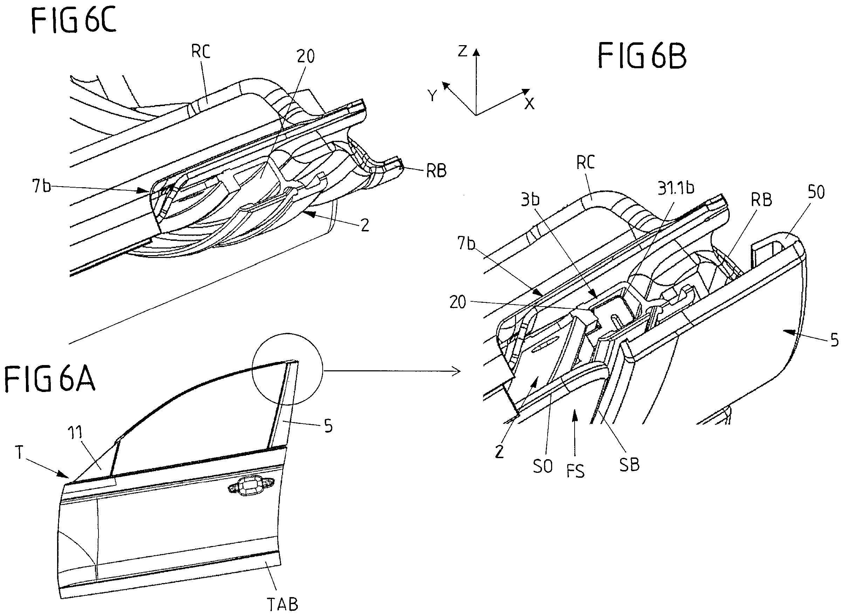

Anhand der Figuren 6A bis 6D ist der Einführbereich an der zweiten, hinteren Führungsleiste 2 sowie ein zugehöriger zurückgesetzter Abschnitt 7b des oberen Rahmenteilen RC an diesem ein Führungsbereich veranschaulicht. Der zurückgesetzte Abschnitt 7b des oberen Rahmenteilen RC springt dabei nach innen zurück, um das Vorbeiführen des zweiten, hinteren scheibenseitigen Führungselements 3b an dem oberen Rahmenteilen RC vorbei und das Einfädeln dieses scheibenseitigen Führungselements 3b in die rahmenseitige hintere Führungsleiste 2 zu ermöglichen. Der nach oben offene Einführbereich der zweiten, hinteren Führungsleiste 2 und der zurückgesetzte (hintere) Abschnitt 7b des oberen Rahmenteilen RC werden hierbei durch die nachfolgend angebrachte Türrahmenleiste 4 verschlossen ebenso wie das nach oben offene Ende der ersten, vorderen Führungsleiste 1 und des zugehörigen (vorderen) zurückgesetzten Abschnitt 7a des oberen Rahmenteilen RC.

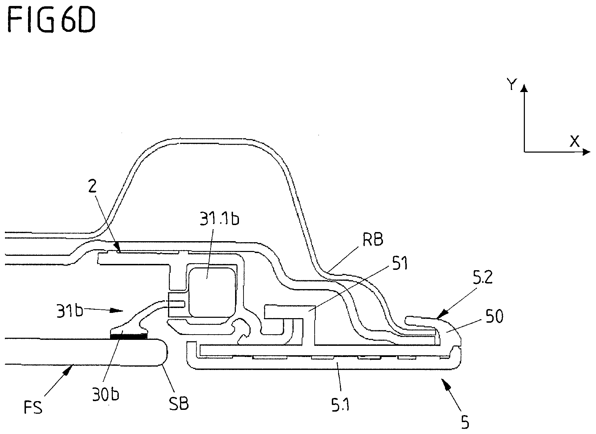

Insbesondere anhand der Schnittdarstellung der Figur 6D ist ferner noch die Fixierung des Blendenelements 5 an dem hinteren seitlichen Rahmenteilen RB und der hinteren Führungsleiste 2 veranschaulicht. Hierbei weist das Blendenelement 5 ein Trägerteil 5.2 auf, das über hieran ausgestaltete, hakenförmige Halteabschnitte 50 und 51 Abschnitte der hinteren Führungsleiste 2 und des hinteren seitlichen Rahmenteils RB hintergreift. Derart ist das Trägerteil 5.2 des Blendenelements 5 sowohl an der hinteren Führungsleiste 2 als auch an dem hinteren seitlichen Rahmenteil RB des Fensterrahmens R mithilfe seiner Halteabschnitte 50 und 51 festgelegt. An dem Trägerteil 5.2 ist ferner eine Sichtblende 5.1 fixiert, die die nach außen sichtbare Oberfläche des Blendenelements 5 ausbildet.

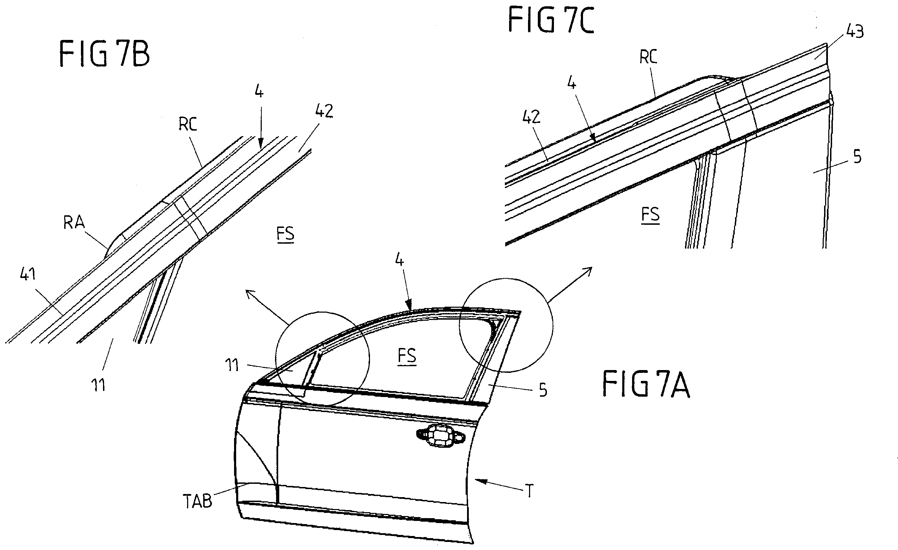

Die Figuren 7A, 7B und 7C zeigen weitere Details des als Türrahmenleiste 4 ausgebildeten Verschlussteils, über das die Einführbereiche der Führungsleisten 1 und 2 sowie die zurückgesetzten Abschnitte 7a und 7b des oberen Rahmenteilen RC nach der Montage der Fensterscheibe FS verschlossen werden. Die Türrahmenleiste 4 wird hierbei an das obere Rahmenteil RC aufgesteckt. Die längserstreckte Türrahmenleiste 4 erstreckt sich dann nach bestimmungsgemäßer Anbringung mit einem vorderen Abschnitt 41 über das Spiegeldreieck 11 bis zum Brüstungsbereich BR der Fahrzeugtür T. An diesen vorderen Abschnitt 41 schließt sich nach hinten ein mittlerer Abschnitt 42 der Türrahmenleiste 4 an, der sich über das komplette obere Rahmenteil RC erstreckt und in einen hinteren Abschnitt 43 oberhalb des Blendenelements 5 übergeht. Die Türrahmenleiste 4 bildet somit einen nach außen sichtbaren und mit der geschlossenen Fensterscheibe FS ebenfalls flächenbündig abschließenden oberen Rand der Fahrzeugtür T aus.

Hierbei ist über die bestimmungsgemäß an dem Türrahmenträger T fixierte Türrahmenleiste 4 ein Ausschieben der scheibenseitigen Führungselemente 3a und 3b aus den rahmenseitigen Führungsleisten 1 und 2 nach oben verhindert, so dass die Fensterscheibe FS nur zu Montagezwecken von oben an den Türrahmenträger TT montierbar ist. Ferner ist an der zumindest teilweise aus einem Kunststoffmaterial, Gummimaterial oder Metall hergestellten Türrahmenleiste 4 eine obere Scheibendichtung vorgesehen oder integriert. In diese Scheibendichtung fährt die Fensterscheibe FS beim Schließen ein oder liegt zumindest hieran an, um die Fensteröffnung O auch im Bereich des oberen Rahmenteils RC über die geschlossene Fensterscheibe FS dichtend zu verschließen.

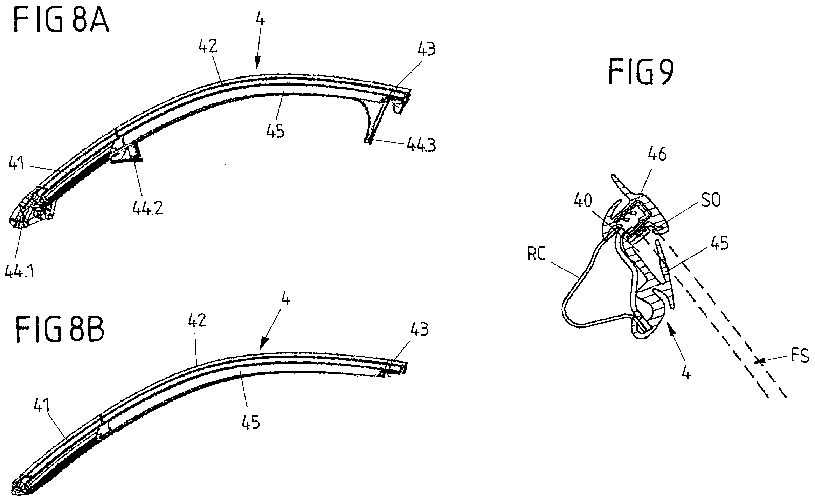

In der perspektivischen Ansicht der Figur 8A ist die Türrahmenleiste 4 mit einer hieran ausgeformten Scheibendichtung 45 für die Scheibenoberkante SO dargestellt. Ferner weist die Türrahmenleiste 4 mehrere (vorliegend drei) angeformte, zum Beispiel angespritzte oder anvulkanisierte Formteile 44.1, 44.2 und 44.3 auf. Die im Bereich eines Übergangs zwischen dem vorderen Abschnitt 41 und dem mittleren Abschnitt 42 der Türrahmenleiste 4 und im Bereich des Endes des hinteren Abschnitts 43 der Türrahmenleiste 4 vorgesehenen Formteile 44.2 und 44.3 stehen dabei bei bestimmungsgemäß Anbringung der Türrahmenleiste 4 in Richtung des Türkastens (nach unten) vor. Diese vorstehenden Formteile 44.2 und 44.3 werden jeweils in einen zugeordneten Führungskanal 10 oder 20 der vorderen oder hinteren Führungsleiste 1 oder 2 von oben eingesteckt, um diesen nach oben hin zu verschließen. Das am vorderen Ende der Türrahmenleiste 4 vorgesehene Formteil 44.1 dient ferner einer definierten Anlage der Türrahmenleiste 4 im Brüstungsbereich BR am vorderen Ende des Spiegeldreiecks 11.

Bei der in der Figur 8B dargestellten Variante sind an der Türrahmenleiste 4 keine Formteile 44.1, 44.2 und 44.3 angeformt. Gleichwohl übernimmt auch eine solche Türrahmenleiste 4 mit der hieran integrierten Scheibendichtung 45 für die Scheibenoberkante SO der Fensterscheibe FS neben einer Verschlussfunktion an den Einführbereichen der Führungsleisten 1 und 2 sowie den zurückgesetzten Abschnitten 7a und 7b des oberen Rahmenteilen RC eine Dichtfunktion für die in ihrem geschlossenen Zustand vorliegende Fensterscheibe FS.

Mit der Schnittdarstellung der Figur 9 ist eine an dem oberen Rahmenteilen RC angebrachte Türrahmenleiste 4 entsprechen den Figuren 8A und 8B hinsichtlich eines exemplarischen Aufbaus näher veranschaulicht. So weist die Türrahmenleiste 4 hier einen starren, vorzugsweise metallischen Einleger 46 auf, über den eine Fixierung an dem oberen Rahmenteil RC erfolgt. Der längserstreckte starre Einleger 46 ist von einem Kunststoffmaterial umgeben, das die Scheibendichtung 45 ausgebildet. Über diese Scheibendichtung 45 ist ein Dichtungskanal 40 definiert, der von einer Dichtlippe berandet ist. Beim Schließen der Fensterscheibe FS fährt die Fensterscheibe FS mit ihrer Scheibenoberkante SO in diesen Dichtungskanal 40 ein, wobei dann die Dichtlippe an einer Scheibeninnenseite anliegt, um insbesondere das Eindringen von Zugluft über die Scheibenoberkante SO hinweg in den Fahrzeuginnenraum zu verhindern.

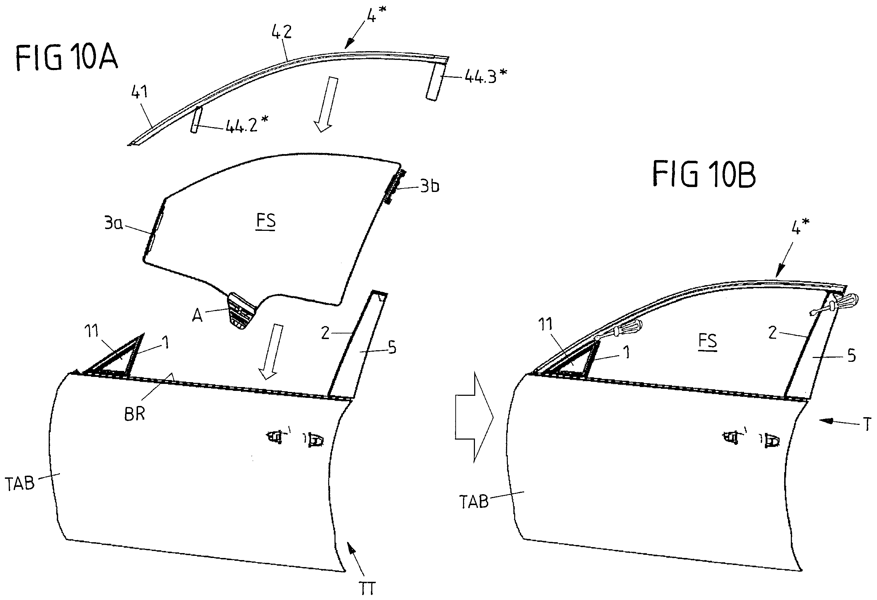

Anhand der Figuren 10A und 10B ist eine weitere Ausführungsvariante einer erfindungsgemäßen Fahrzeugtürbaugruppe veranschaulicht, bei der ein Verschlussteil 4* gleichzeitig auch das obere Rahmenteil des Fensterrahmens R des Türrahmenträgers TT bildet, nachdem die Fensterscheibe FS mit den hieran fixierten scheibenseitigen Führungselementen 3a und 3b von oben an den Türrahmenträger TT montiert wurde.

Der Türrahmenträger TT mit seinem Türaußenblech TAB weist hierbei einen nach oben offenen Fensterrahmen R auf. Lediglich die seitlichen Rahmenteilen RA und RB mit den hieran ausgebildeten oder hieran vorgesehenen rahmenseitigen Führungselementen in Form der Führungsleisten 1 und 2 sind hierbei zur Definition der Fensteröffnung O der Fahrzeugtür T an dem Türrahmenträger TT bereits vorgesehen, bevor die Fensterscheibe FS hieran montiert wird. Derart können die scheibenseitigen Führungselemente 3a, 3b problemlos von oben in die zugehörigen Führungskanäle 10, 20 der Führungsleisten 1 und 2 angesetzt und die Fensterscheibe FS somit von oben in den Türrahmenträger TT eingefädelt werden. Ist die Fensterscheibe FS über die miteinander zusammenwirkenden scheibenseitigen und rahmenseitigen Führungselemente 1, 2, 3a, 3b verschieblich an dem Türrahmenträger TT gehalten, wird von oben das Verschlussteil 4* angebracht, das vorliegend einen Teil des steifen Fensterrahmens R der Fahrzeugtür T bildet.

Hierbei weist das obere Rahmenteil bildende Verschlussteil 4* ein längserstrecktes metallisches Profil auf, das sich im bestimmungsgemäß angebrachten Zustand über die Fensteröffnung O hinweg erstreckt und diese nach oben hin schließt. Zur steifen Verbindung mit den vorderen und hinteren seitlichen Rahmenteilen RA und RB weist das Verschlussteil 4* in Richtung des Türkastens des Türrahmenträgers TT vorstehende Verbindungsabschnitte 44.2* und 44.3*, beispielsweise in Form von Knotenblechen, auf. Über diese Verbindungsabschnitte 44.2* und 44.3* erfolgt nach dem Aufsetzen des Verschlussteils 4* eine starre Verbindung des Verschlussteils 4* mit den seitlichen Rahmenteilen RA, RB des Türrahmenträgers TT.

Auch in dieser Variante kann verständlich vorgesehen sein, dass das Verschlussteil 4* bereits eine Scheibendichtung für die Scheibenoberkante S der Fensterscheibe FS aufweist, bevor es an den Türrahmenträger TT montiert wird. Ebenso kann das Verschlussteil 4* bereits ein an der Außenkarosserie sichtbares Element der Fahrzeugtür T tragen oder ein solches integrieren. Alternativ kann ein separates Blendenelement noch nach Verbindung des Verschlussteils 4* mit den seitlichen Rahmenteilen RA und RB an dem Verschlussteil 4* angebracht werden.

Grundsätzlich wird es hierbei bevorzugt, dass bereits mit dem das obere Rahmenteil bildenden Verschlussteil 4* die an den Führungsleisten 1 und 2 vorgesehenen offenen Enden für das Ansetzen der scheibenseitigen Führungselemente 3a und 3b verschlossen werden. In einer möglichen Weiterbildung kann ein entsprechendes Verschließen aber auch erst über ein nachträglich angebrachtes (zusätzliches) Verschlussteil erfolgen, das am oberen Türrahmen der Fahrzeugtür T eine an der Außenkarosserie sichtbare Oberfläche bildet.

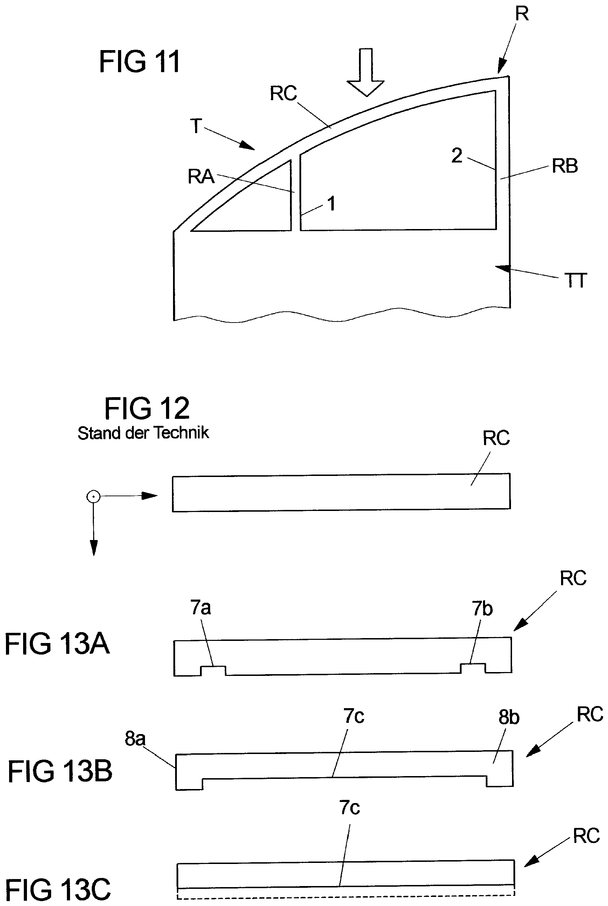

Anhand der Figur 11 ist nochmals schematisch das Grundprinzip einer erfindungsgemäßen Fahrzeugtürbaugruppe und eines entsprechenden erfindungsgemäßen Montageverfahrens veranschaulicht. Hierbei weist ein Fensterrahmen R einer Fahrzeugtür T zwei einander gegenüberliegende Rahmenteile RA und RB auf, an denen eine seitliche Führung der verstellbaren Fensterscheibe FS erfolgt, die in einem geschlossenen Zustand flächenbündig zu oberen und/oder seitlichen Karosserieteilen vorliegt.

An einem diese beiden seitlichen Rahmenteilen RA und RB verbindenden oberen Rahmenteil RC ist gemäß einer Variante wenigstens ein zurückgesetzter Abschnitt vorgesehen. Hierüber ist dann an einem oberhalb eines Brüstungsbereichs BR vorgesehenen Einführbereich an den seitlichen Rahmenteilen RA und RB ein Einführen der Fensterscheibe FS von oben möglich. An das obere Rahmenteilen RC wird dann wenigstens ein Verschlussteil zum Verschließen der für die Montage vorgesehenen Einführbereiche und der zurückgesetzten Abschnitte des oberen Rahmenteilen RC angebracht (vgl. insbesondere Figuren 1 und 2).

Um das Ansetzen scheibenseitiger Führungselemente von oben, gegebenenfalls zusammen mit der Fensterscheibe FS, zu ermöglichen, kann im Übrigen auch das obere Rahmenteil RC separat montierbar ausgestaltet sein, sodass der Fensterrahmen R des Türrahmenträgers TT der Fahrzeugtür T zunächst für die Montage nach oben hin offen ist (vgl. Figuren 10A und 10B).

Die erfindungsgemäße Lösung unterscheidet sich somit von bisher bei flächenbündigen Scheibenkonzepten verwendeten Fahrzeugtüren und insbesondere deren Türrahmenträgern. So ist in der Praxis ein oberes Rahmenteilen RC jeweils entsprechend der Figur 12 derart ausgestaltet, dass es in einem geschlossenen Zustand der Fensterscheibe FS flächenbündig an der Scheibenoberkante SO der Fensterscheibe FS vorliegt. Eine erfindungsgemäße Lösung sieht hierbei demgegenüber beispielsweise vor, dass ein oberes Rahmenteilen RC zumindest lokal im Bereich der seitlichen Rahmenteil RA und RB und zugehöriger rahmenseitiger Führungselemente mit einem zurückgesetzten Abschnitt 7a oder 7b ausgebildet ist. Eine solche Variante ist exemplarisch in der Figur 13A gezeigt.

Eine mögliche Alternative weist ein oberes Rahmenteil RC auf, das über einen Großteil seiner Länge und damit insbesondere über nahezu den gesamten Bereich der

Scheibenoberkante SO der Fensterscheibe FS zurückgesetzt ausgeführt ist. Dementsprechend bildet das obere Rahmenteil RC beispielsweise entsprechend der Figur 13B einen zurückgesetzten Abschnitt 7c aus, der sich über nahezu die gesamte Länge des oberen Rahmenteils RC erstreckt und von zwei seitlichen Stegen 8a und 8b des oberen Rahmenteils RC eingefasst ist.

In einer weiteren Alternative gemäß der Figur 13C kann das obere Rahmenteil RC auch über seine gesamte Länge einen zurückgesetzten Abschnitt 7c ausbilden, um die erfindungsgemäß vorgesehene Einführung scheibenseitiger Führungselemente bei einem flächenbündigen Scheibenkonzept von oben zu ermöglichen.

Mit der erfindungsgemäßen Lösung ist auch eine Montage einer in ihrer geschlossenen Position flächenbündig mit die Fensteröffnung berandenden Karosserieteilen abschließenden Fensterscheibe FS an einer Fahrzeugtür T möglich, die keine abnehmbare Türaußenhaut aufweist. Vielmehr ist der Einbau der Fensterscheibe FS für ein sogenanntes "Flush glass"- oder "Flush glazing"-Fensterhebersystem auch bei einer Fahrzeugtür T möglich, die nach einem herkömmlichen zweischaligen Türkonzept hergestellt ist. Ein Türrahmenträger TT weist hierbei die Türinnenhaut, mithin das Türinnenblech, und die hiermit fest und nicht abnehmbar verbundene Türaußenhaut, mithin das Türaußenblech TAB, auf, bevor die Fensterscheibe FS an den Türrahmenträger TT montiert wird.

### Bezugszeichenliste

- 1: 1. Führungsleiste (1. rahmenseitiges Führungselement)
- 10: Führungskanal
- 11: Spiegeldreieck
- 12: Befestigungskanal
- 2: 2. Führungsleiste (1. rahmenseitiges Führungselement)
- 20: Führungskanal
- 30a, 30b: Basis
- 31a, 31.1b, 31.2b: Führungsabschnitt
- 32b: Federabschnitt
- 3a, 3b: Führungselement (scheibenseitiges Führungselement)
- 4: Türrahmenleiste (Verschlussteil)
- 4*: Oberes Rahmenteil bildendes Verschlussteil
- 40: Dichtungskanal
- 41: Vorderer Abschnitt
- 42: Mittlerer Abschnitt
- 43: Hinterer Abschnitt
- 44.1, 44.2, 44.3: Formteil
- 44.2*, 44.3*: Verbindungsabschnitt
- 45: Scheibendichtung
- 46: Einleger
- 5: Blendenelement
- 5.1: Sichtblende
- 5.2: Trägerteil
- 50, 51: Halteabschnitt
- 6: Spaltdichtung (Dichtelement)
- 62: Befestigungsabschnitt
- 70: Zusätzlicher Rücksprung
- 7a, 7b, 7c: Zurückgesetzter Abschnitt
- 8a, 8b: Steg
- A: Scheibenadapter
- BR: Brüstungsbereich
- FS: Fensterscheibe
- O: Fensteröffnung
- R: Fensterrahmen
- RA: 1. seitliches Rahmenteil
- RB: 2. seitliches Rahmenteil
- RC: Oberes Rahmenteil
- SA, SB: Seitliche Scheibenkante
- SO: Scheibenoberkante
- SU: Scheibenunterkante
- T: Fahrzeugtür
- TAB: Türaußenblech
- TT: Türrahmenträger

## Patentansprüche

1. Fahrzeugtürbaugruppe, mit mindestens
- einer durch einen Fahrzeugfensterheber verstellbaren Fensterscheibe (FS), wobei die Fensterscheibe (FS) in einem geschlossenen Zustand flächenbündig zu oberen und/oder seitlichen Karosserieteilen vorliegt, die eine durch die Fensterscheibe (FS) zu schließende Fensteröffnung (O) einer Fahrzeugtür (T) beranden,
- einem Türrahmenträger (TT), der einen Türkasten unterhalb der Fensteröffnung (O) definiert, in den hinein die Fensterscheibe (FS) zum Öffnen abgesenkt wird, und der wenigstens zwei seitliche Rahmenteile (RA, RB) aufweist, die einander oberhalb des Türkastens an der Fensteröffnung (O) gegenüberliegen,
- einem ersten rahmenseitigen Führungselement (1) zur seitlichen Führung der Fensterscheibe (FS) an einem der seitlichen Rahmenteile (RA, RB) und einem zweiten rahmenseitigen Führungselement (2) zur seitlichen Führung der Fensterscheibe (FS) an dem anderen der seitlichen Rahmenteile (RA, RB), und
- ersten und zweiten scheibenseitigen Führungselementen (3a, 3b), über die die Fensterscheibe (FS) an den rahmenseitigen Führungselementen (1, 2) verschieblich gehalten ist,
**dadurch gekennzeichnet, dass**
- die ersten und zweiten rahmenseitigen Führungselemente (1, 2) jeweils oberhalb des Türkastens einen Einführbereich aufweisen, über den ein jeweils zugeordnetes scheibenseitiges Führungselement (3a, 3b) von oben an das jeweilige erste oder zweite rahmenseitige Führungselement (1, 2) ansetzbar ist, um die Fensterscheibe (FS) an den Türrahmenträger (TT) zu montieren, und
- wenigstens ein nach dem Ansetzen der scheibenseitigen ersten und zweiten Führungselemente (3a, 3b) anzubringendes Verschlussteil (4, 4*) vorgesehen ist, um wenigstens einen der Einführbereiche der ersten und zweiten rahmenseitigen Führungselemente (1, 2) zu verschließen.

2. Fahrzeugtürbaugruppe nach Anspruch 1, **dadurch gekennzeichnet, dass** wenigstens ein rahmenseitiges Führungselement (1, 2) durch ein seitliches Rahmenteil (RA, RB) ausgebildet ist und/oder dass wenigstens ein rahmenseitiges Führungselement (1, 2) durch ein separates Bauteil ausgebildet ist, das an einem seitlichen Rahmenteil (RA, RB) fixiert ist.

3. Fahrzeugtürbaugruppe nach einem der Ansprüche 1 oder 2, **dadurch gekennzeichnet, dass** über ein bestimmungsgemäß angebrachtes Verschlussteil (4, 4*) sowohl ein Einführbereich des ersten rahmenseitigen Führungselements (1) als auch ein Einführbereich des zweiten rahmenseitigen Führungselements (2) verschlossen ist.

4. Fahrzeugtürbaugruppe nach einem der Ansprüche 1 bis 3, **dadurch gekennzeichnet, dass** ein Einführbereich wenigstens eines rahmenseitigen Führungselements (1, 2) durch einen profilierten nach oben offenen Endbereich des rahmenseitigen Führungselements (1, 2) gebildet ist.

5. Fahrzeugtürbaugruppe nach einem der vorhergehenden Ansprüche, **dadurch gekennzeichnet, dass** ein oberes Rahmenteil (RC, 4*) vorgesehen ist, das die ersten und zweiten seitlichen Rahmenteile (RA, RB) oberhalb des Türkastens miteinander verbindet und optional das wenigstens eine Verschlussteil (4) im Bereich des oberen Rahmenteils (RC) anbringbar ist.

6. Fahrzeugtürbaugruppe nach Anspruch 5, **dadurch gekennzeichnet, dass** das obere Rahmenteil (RC) im Einführbereich wenigstens eines rahmenseitigen Führungselements (1, 2) einen Abschnitt (7a, 7b, 7c) ausbildet, der gegenüber einem angrenzenden Abschnitt des oberen Rahmenteils (RC) und/oder gegenüber einem angrenzenden Abschnitt eines seitlichen Rahmenteils (RA, RB) zurückgesetzt ist, und zwar im Wesentlichen senkrecht (Y-Achse) und/oder parallel (X-Achse) zu einer Scheibenebene (XY-Ebene), entlang der sich die montierte Fensterscheibe (FS) im geschlossenen Zustand erstreckt.

7. Fahrzeugtürbaugruppe nach Anspruch 6, **dadurch gekennzeichnet, dass** sich der zurückgesetzte Abschnitt (7c) über eine Länge an dem oberen Rahmenteil (RC) erstreckt, die größer ist als die Hälfte des Abstands zwischen den ersten und zweiten seitlichen Rahmenteilen (RA, RB).

8. Fahrzeugtürbaugruppe nach Anspruch 5, **dadurch gekennzeichnet, dass** das wenigstens eine Verschlussteil (4*) wenigstens einen Teil des oberen Rahmenteils bildet.

9. Fahrzeugtürbaugruppe nach einem der vorhergehenden Ansprüche, **dadurch gekennzeichnet, dass** an dem Verschlussteil (4, 4*) wenigstens ein Abschnitt (44.1, 44.2, 44.3; 44.2*, 44.3*) vorgesehen ist, der im bestimmungsgemäß angebrachten Zustand des Verschlussteils (4) in Richtung des Türkastens vorsteht.

10. Fahrzeugtürbaugruppe nach Anspruch 9, **dadurch gekennzeichnet, dass** über den wenigstens einen vorstehenden Abschnitt (44.1, 44.2, 44.3) bei bestimmungsgemäß angebrachtem Verschlussteil (4, 4*) ein Einführbereich zumindest teilweise verschlossen und/oder überdeckt ist und/oder dass der wenigstens eine vorstehende Abschnitt (44.2*, 44.3*) für eine Verbindung des Verschlussteils (4, 4*) mit einem der seitlichen Rahmenteile (RA, RB) vorgesehen ist.

11. Fahrzeugtürbaugruppe nach einem der vorhergehenden Ansprüche, **dadurch gekennzeichnet, dass** das Verschlussteil (4, 4*) an wenigstens eines der ersten und zweiten seitlichen Rahmenteile (1, 2) und/oder an ein die ersten und zweiten Rahmenteile (RA, RB) miteinander verbindendes oberes Rahmenteil (RC) steckbar ist und/oder dass das Verschlussteil (4, 4*) ein längserstrecktes Leistenelement aufweist, das bei bestimmungsgemäßer Anbringung des Verschlussteils (4, 4*) an dem Türrahmenträger (TT) einen oberen, an der Außenseite der Fahrzeugtür (T) sichtbaren Abschluss der Fensteröffnung (O) bildet, und/oder dass, bei bestimmungsgemäß in ein Fahrzeug eingebauter Fahrzeugtür (T), das erste seitliche Rahmenteil (RA) im Bereich einer A-Säule des Fahrzeugs und das zweite seitliche Rahmenteil (RB) im Bereich einer B-Säule des Fahrzeugs angeordnet sind.

12. Verfahren zur Montage einer Fahrzeugtürbaugruppe, die eine verstellbare Fensterscheibe (FS) für einen Fahrzeugfensterheber sowie einen Türrahmenträger (TT) aufweist, wobei die Fensterscheibe (FS) in einem geschlossenen Zustand flächenbündig zu oberen und/oder seitlichen Karosserieteilen vorliegt, die eine durch die Fensterscheibe (FS) zu schließende Fensteröffnung (O) einer Fahrzeugtür (T) beranden, und der Türrahmenträger (TT) einen Türkasten unterhalb der Fensteröffnung (O) definiert, in den hinein die Fensterscheibe (FS) zum Öffnen abgesenkt wird, und wenigstens zwei seitliche Rahmenteile (RA, RB) aufweist, die einander oberhalb des Türkastens an der Fensteröffnung (O) gegenüberliegen, wobei das Verfahren wenigstens die folgenden Schritte umfasst:
- Bereitstellen des Türrahmenträgers (TT) mit einem ersten rahmenseitigen Führungselement (1) zur seitlichen Führung der Fensterscheibe (FS) an einem der seitlichen Rahmenteile (RA, RB) und einem zweiten rahmenseitigen Führungselement (2) zur seitlichen Führung der Fensterscheibe (FS) an dem anderen der seitlichen Rahmenteile (RA, RB), und
- Bereitstellen von ersten und zweiten scheibenseitigen Führungselementen (3a, 3b), über die die Fensterscheibe (FS) an den rahmenseitigen Führungselementen (1, 2) verschieblich gehalten ist,
**dadurch gekennzeichnet, dass**
- die ersten und zweiten rahmenseitigen Führungselemente (1, 2) jeweils oberhalb des Türkastens einen Einführbereich aufweisen und die ersten und zweiten scheibenseitigen Führungselemente (3a, 3b) über die Einführbereiche von oben an die ersten und zweiten rahmenseitigen Führungselemente (1, 2) angesetzt werden, um die Fensterscheibe (FS) an den Türrahmenträger (TT) zu montieren, und
- wenigstens einer der Einführbereiche der ersten und zweiten rahmenseitigen Führungselemente (1, 2) durch wenigstens ein Verschlussteil (4, 4*) verschlossen wird, nachdem die scheibenseitigen ersten und zweiten Führungselemente (3a, 3b) an die rahmenseitigen Führungselemente angesetzt wurden.

13. Verfahren nach Anspruch 12, **dadurch gekennzeichnet, dass** ein oberes Rahmenteil (RC, 4*) vorgesehen ist, das die ersten und zweiten seitlichen Rahmenteile (RA, RB) oberhalb des Türkastens miteinander verbindet.

14. Verfahren nach Anspruch 13, **dadurch gekennzeichnet, dass** das Verschlussteil (4) an dem oberen Rahmenteil (RC) wenigstens im Bereich eines der zurückgesetzten Abschnitte (7a, 7b, 7c) angebracht wird, wobei das obere Rahmenteil (RC) im Einführbereich wenigstens eines rahmenseitigen Führungselements (1, 2) einen Abschnitt (7a, 7b, 7c) ausbildet, der gegenüber einem angrenzenden Abschnitt des oberen Rahmenteils (RC) und/oder gegenüber einem angrenzenden Abschnitt eines seitlichen Rahmenteils (RA, RB) zurückgesetzt ist, und zwar im Wesentlichen senkrecht und/oder parallel zu einer Scheibenebene, entlang der sich die montierte Fensterscheibe (FS) im geschlossenen Zustand erstreckt.

15. Verfahren nach Anspruch 13, **dadurch gekennzeichnet, dass** das Verschlussteil (4*) nach der Montage der Fensterscheibe (FS) angebracht und mit den ersten und zweiten seitlichen Rahmenteilen (RA, RC) verbunden wird, wobei das wenigstens eine Verschlussteil (4*) wenigstens einen Teil des oberen Rahmenteils bildet und ein durch den Türrahmenträger (TT) definierter Teil eines Fensterrahmens (R) für die Fensteröffnung (O) ohne das angebrachte Verschlussteil (4*) nach oben hin offen ist.

## Claims

1. A vehicle-door assembly, having at least
- a window pane (FS) that is adjustable by a vehicle window lifter, wherein the window pane (FS), in a closed state, is flush with upper and/or lateral body parts that bound a window opening (O), to be closed by the window pane (FS), of a vehicle door (T),
- a door-frame support (TT) which defines a door case beneath the window opening (O), the window pane (FS) being lowered into said door case in order to be opened, and which has at least two lateral frame parts (RA, RB) that are located opposite one another above the door case at the window opening (O),
- a first frame-side guide element (1) for laterally guiding the window pane (FS) at one of the lateral frame parts (RA, RB), and a second frame-side guide element (2) for laterally guiding the window pane (FS) at the other of the lateral frame parts (RA, RB), and
- first and second pane-side guide elements (3a, 3b) via which the window pane (FS) is held in a displaceable manner on the frame-side guide elements (1, 2),
**characterized in that**
- the first and second frame-side guide elements (1, 2) each have, above the door case, an insertion region via which a respectively associated pane-side guide element (3a, 3b) is positionable from above on the respective first or second frame-side guide element (1, 2) in order to mount the window pane (FS) on the door-frame support (TT), and
- at least one closure part (4, 4*) that is to be fitted after the positioning of the pane-side first and second guide elements (3a, 3b) is provided in order to close at least one of the insertion regions of the first and second frame-side guide elements (1, 2).

2. The vehicle-door assembly as claimed in claim 1, **characterized in that** at least one frame-side guide element (1, 2) is formed by a lateral frame part (RA, RB) and/or at least one frame-side guide element (1, 2) is formed by a separate component that is fixed to a lateral frame part (RA, RB).

3. The vehicle-door assembly as claimed in claim 1 or 2, **characterized in that** both an insertion region of the first frame-side guide element (1) and an insertion region of the second frame-side guide element (2) are closed via a properly fitted closure part (4, 4*).

4. The vehicle-door assembly as claimed in one of the claims 1 to 3, **characterized in that** an insertion region of at least one frame-side guide element (1, 2) is formed by a profiled upwardly open end region of the frame-side guide element (1, 2).

5. The vehicle-door assembly as claimed in one of the preceding claims, **characterized in that** an upper frame part (RC, 4*) is provided, which connects the first and second lateral frame parts (RA, RB) above the door case together and optionally the at least one closure part (4) is fittable in the region of the upper frame part (RC).

6. The vehicle-door assembly as claimed in claim 5, **characterized in that** the upper frame part (RC) forms, in the insertion region of at least one frame-side guide element (1, 2), a portion (7a, 7b, 7c) that is set back with respect to an adjoining portion of the upper frame part (RC) and/or with respect to an adjoining portion of a lateral frame part (RA, RB), and specifically substantially perpendicularly (Y axis) and/or parallel (X axis) to a pane plane (XY plane) along which the mounted window pane (FS) extends in the closed state.

7. The vehicle-door assembly as claimed in claim 6, **characterized in that** the set-back portion (7c) extends at the upper frame part (RC) along a length that is greater than half the distance between the first and second lateral frame parts (RA, RB).

8. The vehicle-door assembly as claimed in claim 5, **characterized in that** the at least one closure part (4*) forms at least a part of the upper frame part.

9. The vehicle-door assembly as claimed in one of the preceding claims, **characterized in that** at least one portion (44.1, 44.2, 44.3; 44.2*, 44.3*) that protrudes in the direction of the door case in the properly fitted state of the closure part (4) is provided on the closure part (4, 4*).

10. The vehicle-door assembly as claimed in claim 9, **characterized in that**, via the at least one protruding portion (44.1, 44.2, 44.3), with the closure part (4, 4*) fitted properly, an insertion region is at least partially closed and/or covered, and/or **in that** the at least one protruding portion (44.2*, 44.3*) is provided to connect the closure part (4, 4*) to one of the lateral frame parts (RA, RB).

11. The vehicle-door assembly as claimed in one of the preceding claims, **characterized in that** the closure part (4, 4*) is pluggable onto at least one of the first and second lateral frame parts (1, 2) and/or onto an upper frame part (RC) that connects the first and second frame parts (RA, RB) together and/or **in that** the closure part (4, 4*) has an elongate strip element, which, when the closure part (4, 4*) is fitted properly on the door-frame support (TT), forms an upper termination of the window opening (O), said termination being visible on the outer side of the vehicle door (T), and/or **in that**, with a vehicle door (T) installed properly in a vehicle, the first lateral frame part (RA) is arranged in the region of an A pillar of the vehicle and the second lateral frame part (RB) is arranged in the region of a B pillar of the vehicle.

12. A method for mounting a vehicle-door assembly that has an adjustable window pane (FS) for a vehicle window lifter, and a door-frame support (TT), wherein the window pane (FS), in a closed state, is flush with upper and/or lateral body parts that bound a window opening (O), to be closed by the window pane (FS), of a vehicle door (T), and the door-frame support (TT) defines a door case beneath the window opening (O), the window pane (FS) being lowered into said door case in order to be opened, and has at least two lateral frame parts (RA, RB) that are located opposite one another above the door case at the window opening (O), wherein the method comprises at least the following steps of:
- providing the door-frame support (TT) having a first frame-side guide element (1) for laterally guiding the window pane (FS) at one of the lateral frame parts (RA, RB), and a second frame-side guide element (2) for laterally guiding the window pane (FS) at the other of the lateral frame parts (RA, RB), and
- providing first and second pane-side guide elements (3a, 3b) via which the window pane (FS) is held in a displaceable manner on the frame-side guide elements (1, 2),
**characterized in that**
- the first and second frame-side guide elements (1, 2) each have an insertion region above the door case, and the first and second pane-side guide elements (3a, 3b) are positioned from above on the first and second frame-side guide elements (1, 2) via the insertion regions in order to mount the window pane (FS) on the door-frame support (TT), and
- at least one of the insertion regions of the first and second frame-side guide elements (1, 2) is closed by at least one closure part (4, 4*) after the pane-side first and second guide elements (3a, 3b) have been positioned on the frame-side guide elements.

13. The method as claimed in claim 12, **characterized in that** an upper frame part (RC, 4*) is provided, which connects the first and second lateral frame parts (RA, RB) above the door case together.

14. The method as claimed in claim 13, **characterized in that** the upper frame part (RC) forms, in the insertion region of at least one frame-side guide element (1, 2), a portion (7a, 7b, 7c) that is set back with respect to an adjoining portion of the upper frame part (RC) and/or with respect to an adjoining portion of a lateral frame part (RA, RB), and specifically substantially perpendicularly and/or parallel to a pane plane along which the mounted window pane (FS) extends in the closed state, and the closure part (4) is fitted on the upper frame part (RC) at least in the region of one of the set-back portions (7a, 7b, 7c).

15. The method as claimed in claim 13, **characterized in that**, after the window pane (FS) has been mounted, the closure part (4*) is fitted and connected to the first and second lateral frame parts (RA, RC), wherein the at least one closure part (4*) forms at least a part of the upper frame part, and a part of a window frame (R) that is defined by the door-frame support (TT) is upwardly open for the window opening (0) without the fitted closure part (4*).

## Revendications

1. Module de porte de véhicule, avec au moins
- une vitre (FS) pouvant être déplacée par un lève-vitre, dans lequel la vitre (FS), dans un état fermé, se présente à fleur par rapport à des parties supérieures et/ou latérales de carrosserie, qui délimitent une ouverture de fenêtre (O), destinée à être fermée par la vitre (FS), d'une porte de véhicule (T),
- un support de cadre de porte (TT), qui définit un caisson de porte au-dessous de l'ouverture de fenêtre (O), à l'intérieur duquel la vitre (FS) est abaissée pour l'ouverture, et qui présente au moins deux parties latérales de cadre (RA, RB) qui se font face au-dessus du caisson de porte sur l'ouverture de fenêtre (O),
- un premier élément de guidage côté cadre (1) pour le guidage latéral de la vitre (FS) sur une des parties latérales de cadre (RA, RB) et un deuxième élément de guidage côté cadre (2) pour le guidage latéral de la vitre (FS) sur l'autre des parties latérales de cadre (RA, RB), et
- des premier et deuxième éléments de guidage côté vitre (3a, 3b), par l'intermédiaire desquels la vitre (FS) est retenue coulissante sur les éléments de guidage côté cadre (1, 2),
**caractérisé en ce que**
- les premier et deuxième éléments de guidage côté cadre (1, 2) présentent respectivement au-dessus du caisson de porte une zone d'introduction par l'intermédiaire de laquelle un élément de guidage côté vitre (3a, 3b) respectivement associé peut être appliqué par le haut sur le premier ou deuxième élément de guidage côté cadre (1, 2) respectif, afin de monter la vitre (FS) sur le support de cadre de porte (TT), et
- au moins une partie de fermeture (4, 4*) à placer après l'application des premier et deuxième éléments de guidage côté vitre (3a, 3b) est prévue, afin de fermer au moins une des zones d'introduction des premier et deuxième éléments de guidage côté cadre (1, 2).

2. Module de porte de véhicule selon la revendication 1, **caractérisé en ce qu'**au moins un élément de guidage côté cadre (1, 2) est réalisé par une partie latérale de cadre (RA, RB) et/ou qu'au moins un élément de guidage côté cadre (1, 2) est réalisé par un composant séparé, qui est placé sur une partie latérale de cadre (RA, RB).

3. Module de porte de véhicule selon l'une quelconque des revendications 1 ou 2, **caractérisé en ce qu'**aussi bien une zone d'introduction du premier élément de guidage côté cadre (1) qu'une zone d'introduction du deuxième élément de guidage côté cadre (2) est fermée par l'intermédiaire d'une partie de fermeture (4, 4*) placée conformément à l'usage prévu.

4. Module de porte de véhicule selon l'une quelconque des revendications 1 à 3, **caractérisé en ce qu'**une zone d'introduction d'au moins un élément de guidage côté cadre (1, 2) est formée par une zone d'extrémité profilée ouverte vers le haut de l'élément de guidage côté cadre (1, 2).

5. Module de porte de véhicule selon l'une quelconque des revendications précédentes, **caractérisé en ce qu'**une partie supérieure de cadre (RC, 4*) est prévue, qui relie l'une à l'autre les première et deuxième parties latérales de cadre (RA, RB) au-dessus du caisson de porte et éventuellement l'au moins une partie de fermeture (4) peut être placée dans la zone de la partie supérieure de cadre (RC).

6. Module de porte de véhicule selon la revendication 5, **caractérisé en ce que** la partie supérieure de cadre (RC) réalise dans la zone d'introduction d'au moins un élément de guidage côté cadre (1, 2) une section (7a, 7b, 7c) qui est en retrait par rapport à une section adjacente de la partie supérieure de cadre (RC) et/ou par rapport à une section adjacente d'une partie latérale de cadre (RA, RB), et ce sensiblement perpendiculairement (axe Y) et/ou parallèlement (axe X) à un plan de vitre (plan XY) le long duquel la vitre (FS) montée s'étend dans l'état fermé.

7. Module de porte de véhicule selon la revendication 6, **caractérisé en ce que** la section (7c) en retrait s'étend sur la partie supérieure de cadre (RC) sur une longueur qui est supérieure à la moitié de la distance entre les première et deuxième parties latérales de cadre (RA, RB).

8. Module de porte de véhicule selon la revendication 5, **caractérisé en ce que** l'au moins une partie de fermeture (4*) forme au moins une partie de la partie supérieure de cadre.

9. Module de porte de véhicule selon l'une quelconque des revendications précédentes, **caractérisé en ce qu'**au moins une section (44.1, 44.2, 44.3 ; 44.2*, 44.3*) qui, dans l'état placé conformément à l'usage prévu de la partie de fermeture (4), fait saillie en direction du caisson de porte, est prévue sur la partie de fermeture (4, 4*).

10. Module de porte de véhicule selon la revendication 9, **caractérisé en ce que**, lorsque la partie de fermeture (4, 4*) est placée conformément à l'usage prévu, une zone d'introduction est au moins en partie fermée et/ou recouverte par l'intermédiaire de l'au moins une section (44.1, 44.2, 44.3) en saillie et/ou que l'au moins une section (44.2*, 44.3*) en saillie est prévue pour une liaison de la partie de fermeture (4, 4*) à une des parties latérales de cadre (RA, RB).

11. Module de porte de véhicule selon l'une quelconque des revendications précédentes, **caractérisé en ce que** la partie de fermeture (4, 4*) peut être fixée sur au moins une des première et deuxième parties latérales de cadre (1, 2) et/ou à une partie supérieure de cadre (RC) reliant les première et deuxième parties de cadre (RA, RB) l'une à l'autre et/ou que la partie de fermeture (4, 4*) présente un élément baguette étendu longitudinalement qui, lorsque la partie de fermeture (4, 4*) est placée conformément à l'usage prévu sur le support de cadre de porte (TT), forme une terminaison supérieure de l'ouverture de fenêtre (O) visible sur la face extérieure de la porte de véhicule (T), et/ou que, lorsque la porte de véhicule (T) est installée dans un véhicule conformément à l'usage prévu, la première partie latérale de cadre (RA) est disposée dans la zone d'un pied avant du véhicule et la deuxième partie latérale de cadre (RB) dans la zone d'un pied milieu du véhicule.

12. Procédé pour le montage d'un module de porte de véhicule, qui présente une vitre (FS) mobile pour un lève-vitre ainsi qu'un support de cadre de porte (TT), dans lequel la vitre (FS), dans un état fermé, se présente à fleur par rapport à des parties supérieures et/ou latérales de carrosserie, qui délimitent une ouverture de fenêtre (O), destinée à être fermée par la vitre (FS), d'une porte de véhicule (T), et le support de cadre de porte (TT) définit un caisson de porte au-dessous de l'ouverture de fenêtre (O), à l'intérieur duquel la vitre (FS) est abaissée pour l'ouverture, et au moins deux parties latérales de cadre (RA, RB) qui se font face au-dessus du caisson de porte sur l'ouverture de fenêtre (O), dans lequel le procédé comprend au moins les étapes suivantes :
- la fourniture du support de cadre de porte (TT) avec un premier élément de guidage côté cadre (1) pour le guidage latéral de la vitre (FS) sur une des parties latérales de cadre (RA, RB) et un deuxième élément de guidage côté cadre (2) pour le guidage latéral de la vitre (FS) sur l'autre des parties latérales de cadre (RA, RB), et
- la fourniture de premier et deuxième éléments de guidage côté vitre (3a, 3b), par l'intermédiaire desquels la vitre (FS) est retenue coulissante sur les éléments de guidage côté cadre (1, 2),
**caractérisé en ce que**
- les premier et deuxième éléments de guidage côté cadre (1, 2) présentent respectivement au-dessus du caisson de porte une zone d'introduction et les premier et deuxième éléments de guidage côté vitre (3a, 3b) sont appliqués par le haut sur les premier et deuxième éléments de guidage côté cadre (1, 2) par l'intermédiaire des zones d'introduction, afin de monter la vitre (FS) sur le support de cadre de porte (TT), et
- au moins une des zones d'introduction des premier et deuxième éléments de guidage côté cadre (1, 2) est fermée par au moins une partie de fermeture (4, 4*), après que les premier et deuxième éléments de guidage côté vitre (3a, 3b) ont été appliqués sur les éléments de guidage côté cadre.

13. Procédé selon la revendication 12, **caractérisé en ce qu'**une partie supérieure de cadre (RC, 4*) est prévue, qui relie l'une à l'autre les première et deuxième parties latérales de cadre (RA, RB) au-dessus du caisson de porte.

14. Procédé selon la revendication 13, **caractérisé en ce que** la partie de fermeture (4) est placée sur la partie supérieure de cadre (RC) au moins dans la zone d'une des sections (7a, 7b, 7c) en retrait, dans lequel la partie supérieure de cadre (RC) réalise dans la zone d'introduction d'au moins un élément de guidage côté cadre (1, 2) une section (7a, 7b, 7c) qui est en retrait par rapport à une section adjacente de la partie supérieure de cadre (RC) et/ou par rapport à une section adjacente d'une partie latérale de cadre (RA, RB), et ce sensiblement perpendiculairement et/ou parallèlement à un plan de vitre le long duquel la vitre (FS) montée s'étend dans l'état fermé.

15. Procédé selon la revendication 13, **caractérisé en ce que** la partie de fermeture (4*) est placée après le montage de la vitre (FS) et reliée aux première et deuxième parties latérales de cadre (RA, RC), dans lequel l'au moins une partie de fermeture (4*) forme au moins une partie de la partie supérieure de cadre et une partie, définie par le support de cadre de porte (TT), d'un cadre de fenêtre (R) pour l'ouverture de fenêtre (O) sans la partie de fermeture (4*) placée est ouvert vers le haut.
